(19) **Europäisches Patentamt / European Patent Office / Office européen des brevets**

(11) **EP 3 710 128 B1**

(12) **FASCICULE DE BREVET EUROPEEN**

(45) Date de publication et mention de la délivrance du brevet:
**11.09.2024 Bulletin 2024/37**

(21) Numéro de dépôt: **18827160.5**

(22) Date de dépôt: **16.11.2018**

(51) Classification Internationale des Brevets (IPC):
**B01D 15/18** *(2006.01)*   **C13K 1/00** *(2006.01)*
**C13K 11/00** *(2006.01)*

(52) Classification Coopérative des Brevets (CPC):
**B01D 15/1828; C13K 1/00; C13K 11/00**

(86) Numéro de dépôt international:
**PCT/FR2018/052872**

(87) Numéro de publication internationale:
**WO 2019/097181 (23.05.2019 Gazette 2019/21)**

(54) **PROCEDE DE SEPARATION D'UN MELANGE AVEC MESURE DE PURETE OU RENDEMENT SUR UNE CUVE INTERMEDIAIRE**

**VERFAHREN ZUR TRENNUNG EINES GEMISCHES MIT MESSUNG DER REINHEIT ODER AUSBEUTE BEI EINEM ZWISCHENBEHÄLTER**

**PROCESS FOR SEPARATING A MIXTURE WITH MEASUREMENT OF PURITY OR YIELD ON AN INTERMEDIATE TANK**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2017 FR 1760831**

(43) Date de publication de la demande:
**23.09.2020 Bulletin 2020/39**

(73) Titulaire: **Novasep Process Solutions**
**01700 Saint-Maurice-de-Beynost (FR)**

(72) Inventeurs:
 • **PRIEUR, Cédric**
 **69740 Genas (FR)**
 • **VALÉRY, Eric**
 **54425 Saulxures-lès-Nancy (FR)**

(74) Mandataire: **Bandpay & Greuter**
**11 rue Christophe Colomb**
**75008 Paris (FR)**

(56) Documents cités:
| | |
|---|---|
| EP-A1- 0 878 222 | EP-A1- 1 982 752 |
| EP-A1- 2 711 063 | WO-A2-2007/101944 |
| FR-A1- 2 808 270 | US-A1- 2013 260 419 |

**Description**

DOMAINE DE L'INVENTION

La présente invention concerne un procédé chromatographique de séparation d'un mélange.

ARRIERE-PLAN TECHNIQUE

La chromatographie est une technique de séparation basée sur la différence de distribution des composés d'un mélange entre une phase mobile et une phase stationnaire. Les composés sont séparés en percolant une phase mobile constituée par un solvant liquide, gazeux ou supercritique dans un dispositif (appelé colonne ou cellule) rempli de phase stationnaire, une séparation étant opérée lorsque tout ou partie des composés ont une vitesse de percolation différente les uns par rapport aux autres. Cette méthode est mise en oeuvre comme technique d'analyse afin d'identifier et de quantifier les composés d'un mélange. Elle peut également être mise en oeuvre comme technique de purification.

Selon les besoins, différents procédés chromatographiques sont employés pour réaliser la purification de molécules. Quelques-uns sont décrits dans le document Large Scale Adsorption and Chromatography, P.C. Wankat, CRC press, Boca-Raton, 1986, le document Adsorption and Ion Exchange, M.D. Le Van et al., Perry's Chemical Engineers' Handbook 7ème édition, Section 16, Mac-Graw-Hill, N-1, 1997 et le document Choice and optimization of operating mode in industrial chromatography, R. M. Nicoud et al., Proceeding of the 9th International Symposium on preparative and industrial chromatography, PREP 92, Avril 1992, Nancy, p. 205-220. Ces procédés peuvent être classés suivant plusieurs critères : le procédé peut être soit discontinu, soit continu, les systèmes peuvent comporter une ou plusieurs colonnes, la composition de l'éluant peut être isocratique ou un gradient peut être employé.

Plusieurs méthodes pour réguler ces procédés ont été décrites, notamment dans les documents FR 2699917, US 5,457,260, FR 2762793, DE 19842550, US 2005/0107895 et l'article Optimal operation of simulated moving bed chromatographie processes by means of simple feedback control, H. Schramm et al., Journal of Chromatography A, 2003, vol. 1006, p.3-13.

Le document FR 2808270 décrit un procédé de production de para- et métaxylène à partir d'une charge d'hydrocarbures utilisant une séparation chromatographique du mélange en lit mobile simulé. Le second raffinat peut être collecté dans un ballon tampon avant de subir une distillation.

Le document EP 0878222 décrit un dispositif SMB comportant au moins un détecteur de concentration situé dans le passage de circulation du fluide, des moyens situés dans les lignes de sortie pour mesurer la concentration d'un composé dans l'extrait et/ou dans le raffinat et un contrôleur d'opération déterminant les conditions de commande du fonctionnement du dispositif sur la base des données de concentrations provenant du détecteur de concentration et des moyens situés sur les lignes de sortie.

Le document WO 2007/101944 décrit un procédé chromatographique dans lequel un détecteur détermine en un noeud du dispositif de chromatographie l'historique d'une variable. Sur cet historique, sont détectés un point caractéristique situé dans une zone comprise entre une collecte de raffinat et une collecte d'extrait successives encadrant l'injection du mélange à séparer, un point caractéristique situé sur le front d'adsorption, un point caractéristique situé sur le front de désorption et les positions de ces points sont comparées à des positions cibles. La quantité de phase mobile dans les zones portant ces points caractéristiques est alors ajustée pour faire coïncider la position des points caractéristiques avec leur position cible.

Dans un procédé de chromatographie multicolonne cyclique, en tout point du système chromatographique, les concentrations des espèces évoluent sans cesse de façon périodique. Cependant, il peut exister des asymétries dans le système chromatographique qui induisent des disparités de composition des fractions collectées d'une colonne à l'autre.

L'obtention de la pureté précise d'une fraction collectée nécessite alors souvent l'utilisation d'un dispositif hors ligne de collecte d'échantillon qui effectue un prélèvement des fluides sortant du système chromatographique (c'est-à-dire des fluides dans les lignes de sortie), au moins sur une période et préférentiellement sur un cycle. Ce dispositif hors ligne permet de stocker un fluide représentatif, qui est isolé puis analysé, cette analyse nécessitant un certain temps. Entre chaque analyse, le dispositif hors ligne de collecte d'échantillon est purgé, nettoyé et préparé pour une nouvelle mesure. En plus de complexifier le dispositif d'analyse, ces étapes de purge, nettoyage et préparation peuvent empêcher de réaliser une mesure à chaque cycle.

Il existe donc un besoin de fournir un procédé de mesure de pureté d'une fraction collectée simplifié, permettant de s'affranchir d'un dispositif hors ligne de collecte dédié à l'analyse des échantillons prélevés dans les lignes de sortie.

RESUME DE L'INVENTION

L'invention concerne en premier lieu un procédé de séparation d'un mélange dans une installation comprenant :

- un premier système comprenant une pluralité de colonnes de chromatographie, une ligne de sortie pour la collecte d'un raffinat et une ligne de sortie pour la collecte d'un extrait ;
- au moins un second système placé en aval du premier système ; et
- au moins une cuve alimentée par une desdites lignes de sortie du premier système, et alimentant le second système avec un flux continu ;

le procédé comprenant successivement, de manière cyclique, dans une partie donnée du premier système :

- une étape de collecte d'un raffinat, une étape d'injection du mélange à séparer, une étape de collecte d'un extrait et une étape d'injection de phase mobile ;

le procédé comprenant par ailleurs la mesure de la pureté et/ou du rendement d'au moins une fraction collectée choisie parmi l'extrait et le raffinat, ladite mesure de pureté et/ou de rendement comprenant les étapes suivantes:

- la détermination de la concentration d'au moins deux espèces du mélange à séparer dans la fraction collectée dans la cuve ;
- la détermination de la pureté et/ou du rendement en au moins une espèce de la fraction collectée dans la cuve à partir des concentrations des au moins deux espèces du mélange à séparer déterminées dans la fraction collectée dans la cuve.

Selon des modes de réalisation, la détermination de la concentration d'au moins deux espèces du mélange à séparer dans la fraction collectée dans la cuve est effectuée au moyen d'au moins un détecteur.

Selon des modes de réalisation, l'au moins un détecteur est choisi parmi les spectromètres proche infrarouge, les spectromètres infrarouge, les spectromètres infrarouge à transformée de Fourier et les spectromètres Raman ; ou parmi les systèmes de chromatographie analytique, tels que la chromatographie en phase liquide à haute performance, la chromatographie en phase liquide à haute pression, la chromatographie en phase liquide à ultra haute pression, la chromatographie en phase gazeuse.

Selon des modes de réalisation, le second système est une unité de chromatographie, une unité de transformation enzymatique, une unité de transformation chimique, une unité de distillation, une unité de concentration membranaire, ou une unité d'évaporation, de préférence une unité d'évaporation.

Selon des modes de réalisation, la cuve contient un volume de fraction égal au volume de la fraction collectée sur une durée d'une à cinq périodes, de préférence sur trois périodes du procédé.

Selon des modes de réalisation, la cuve a un volume inférieur au volume de la fraction collectée sur un cycle.

Selon des modes de réalisation, les au moins deux espèces du mélange à séparer sont des monosaccharides, de préférence le glucose et le fructose, et l'extrait et le raffinat sont enrichis en des monosaccharides différents.

Selon des modes de réalisation, l'injection du mélange à séparer est continue ou quasi-continue, ledit procédé étant de préférence un procédé à lit mobile simulé.

Selon des modes de réalisation, l'injection du mélange à séparer est discontinue, ledit procédé étant de préférence un procédé à lit mobile simulé séquentiel.

Selon des modes de réalisation, le procédé comprend en outre :

- la détermination, en un noeud du système, de l'historique d'une variable représentative de la concentration d'une ou plusieurs espèces contenues dans le mélange à séparer ;
- la détection sur l'historique d'un point caractéristique situé entre le début d'une étape de collecte du raffinat et la fin de l'étape suivante de collecte de l'extrait ;
- la comparaison de la position dudit point caractéristique par rapport à une position cible ;
- l'ajustement du volume porteur dudit point caractéristique modifiant la position dudit point caractéristique pour la rapprocher de sa position cible.

Selon des modes de réalisation, le procédé comprend en outre :

- la détection sur l'historique d'un premier point caractéristique entre le début de l'étape de collecte d'extrait et la fin de l'étape suivante d'injection de phase mobile ;
- la détection sur l'historique d'un deuxième point caractéristique entre le début de l'étape d'injection de phase mobile et la fin de l'étape suivante de collecte de raffinat ;
- la comparaison de la position de chacun des points caractéristiques à une position cible respective ;
- l'ajustement du volume porteur du premier point caractéristique et du volume porteur du deuxième point caractéristique, modifiant la position du premier point caractéristique et du deuxième point caractéristique, pour les rapprocher de leurs positions cibles respectives.

Selon des modes de réalisation, le procédé comprend en outre :

- la détermination, en un noeud du système, de l'historique d'une variable représentative de la concentration d'une ou plusieurs espèces contenues dans le mélange à séparer ;
- la détection sur ledit historique d'un point caractéristique entre le début d'une étape de collecte de l'extrait et la fin de l'étape suivante de collecte du raffinat ;
- la comparaison de la position dudit point caractéristique par rapport à une position cible ;
- l'ajustement du volume porteur dudit point caractéristique, modifiant la position dudit point caractéristique pour rapprocher la position dudit point caractéristique de sa position cible ;
- le volume de la phase mobile injecté par cycle étant de préférence maintenu supérieur ou égal à une borne minimale et/ou inférieur ou égal à une borne maximale.

Selon des modes de réalisation, le procédé comprend en outre une étape de comparaison de la pureté et/ou du rendement mesuré avec une pureté et/ou un rendement cible.
Selon des modes de réalisation, le procédé comprend en outre :

- une étape de modification du volume de mélange à séparer injecté par cycle en fonction de la différence entre la pureté et/ou le rendement mesuré et la pureté et/ou le rendement cible ; et/ou
- une étape de modification du volume de phase mobile injecté par cycle en fonction de la différence entre la pureté et/ou le rendement mesuré et la pureté et/ou le rendement cible ; et/ou
- une étape de définition de la ou des positions cibles en fonction de la différence entre la pureté et/ou le rendement mesuré et la pureté cible.

La présente invention permet de surmonter les inconvénients de l'état de la technique.
La présente divulgation décrit, selon un premier aspect ne représentant pas l'invention, un procédé qui repose sur une régulation d'un système de séparation chromatographique permettant d'optimiser les paramètres opératoires tels que les débits ou les périodes, ayant une ou plusieurs propriétés avantageuses parmi les propriétés suivantes :

- le procédé permet de répondre aux exigences de pureté et/ou de rendement des fractions collectées,
- le procédé permet une adaptation aux variations des conditions chromatographiques en supportant les inerties intrinsèques aux systèmes chromatographiques et/ou en supportant les éventuels délais d'analyse, en particulier d'analyse de pureté et de rendement,
- le procédé permet de satisfaire à des contraintes de volume de phase mobile injecté, qu'il s'agisse d'un volume maximal à ne pas dépasser ou d'un volume minimal à respecter.

Le procédé selon ce premier aspect repose sur :

- l'utilisation d'un point caractéristique dit « *de basse concentration* » localisé sur l'historique d'une variable représentative entre le début d'une étape de collecte de l'extrait et la fin de l'étape suivante de collecte du raffinat, dont la position est ramenée vers une position cible par un ajustement du volume porteur dudit point caractéristique ; en conjonction avec
- la fixation d'une borne minimale et/ou d'une borne maximale pour le volume de phase mobile injectée, par cycle.

Dans le document WO 2007/101944, deux points caractéristiques de l'historique, respectivement dédiés à l'adsorption et la désorption, sont contrôlés (voir les figures 22 et 23 et le passage correspondant de la description). Selon le procédé selon le premier aspect, un unique point caractéristique est contrôlé à la place de ces deux points caractéristiques. Par rapport à l'enseignement du document WO 2007/101944, ce contrôle de la position d'un point caractéristique unique, définissant moins parfaitement la position des deux fronts d'adsorption et de désorption, permet en contrepartie de contrôler la quantité de phase mobile injectée à chaque cycle de façon précise et notamment d'en garantir une évolution contrôlée entre une quantité maximale et/ou minimale de phase mobile injectée.
La présente divulgation décrit également, selon un deuxième aspect ne représentant pas l'invention, un procédé qui repose sur une mesure de pureté (et/ou de rendement) d'une ou plusieurs fractions collectées ne nécessitant pas de dispositif hors ligne de collecte dédié à l'analyse de la pureté de la fraction collectée. Le procédé selon ce deuxième aspect présente une ou plusieurs propriétés avantageuses parmi les suivantes : le procédé permet une obtention rapide et simple de mesure de pureté de la fraction collectée, le procédé permet des économies en termes de nettoyage, le procédé permet de simplifier le dispositif nécessaire pour effectuer des mesures de pureté et permet également d'augmenter la fréquence des mesures, car les étapes de collectes cycliques d'échantillon représentatif, de nettoyage et de préparation du dispositif sont éliminées.

Cela est accompli grâce à l'utilisation d'au moins un détecteur en ligne et à la détermination des historiques d'au moins deux variables représentatives de la concentration d'au moins deux espèces contenues dans le mélange à séparer au moyen de ce détecteur. Un détecteur comme par exemple un spectromètre peut mesurer plusieurs variables représentatives. Cette mesure de pureté peut être utilisée pour un suivi d'installation ou combinée à l'utilisation de différents algorithmes de contrôle.

La présente divulgation décrit également un procédé selon un troisième aspect, qui constitue la présente invention. L'invention repose sur une mesure de pureté (et/ou de rendement) d'une ou plusieurs fractions collectées ne nécessitant pas de dispositif hors ligne de collecte dédié à l'analyse de la pureté de la fraction collectée. L'invention présente un ou plusieurs avantages parmi les suivants : le procédé est adapté à l'emploi de détecteurs lents et peut être mis en oeuvre lorsqu'une utilisation de détecteurs rapides n'est pas possible, le procédé peut être mis en oeuvre dans des installations classiques dans lesquelles une cuve de stockage précédant un autre système tel qu'un moyen de concentration est présente, le procédé n'exige pas de dispositif nécessitant d'être purgé et nettoyé entre chaque analyse de pureté.

Cela est accompli grâce à la mesure des concentrations des espèces de la fraction collectée dans une cuve intermédiaire présente sur la ligne de sortie de la fraction collectée. Ce dispositif de mesure de pureté peut être utilisé pour un suivi d'installation ou combiné à l'utilisation de différents algorithmes de contrôle.

Dans certains modes de réalisation des procédés divulgués dans le présent texte, le premier aspect est mis en oeuvre conjointement au deuxième aspect.

Dans certains modes de réalisation des procédés divulgués dans le présent texte, le premier aspect est mis en oeuvre conjointement au troisième aspect.

BREVE DESCRIPTION DES FIGURES

Les figures suivantes sont obtenues à partir de procédés chromatographiques à accumulation, et plus particulièrement des procédés SMB ou SSMB.

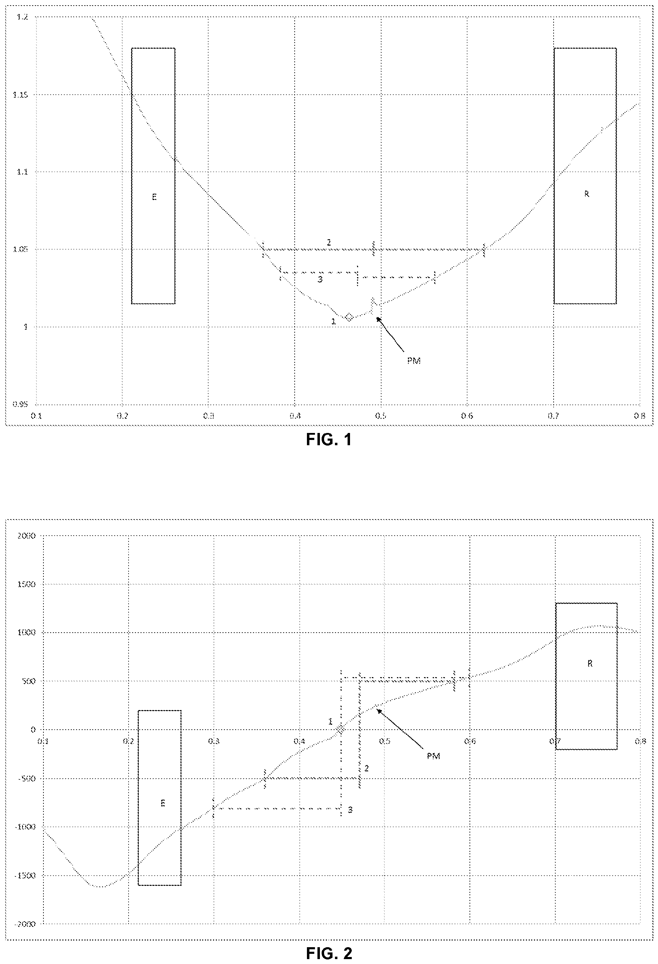

La **figure 1** représente un historique de densité sur lequel sont représentés trois exemples de point caractéristique de basse concentration. L'axe des abscisses correspond à un indice de volume représentant le volume observé au noeud d'observation par rapport au volume total observé au noeud d'observation sur un cycle. L'axe des ordonnées correspond à la densité.

La **figure 2** représente un historique de pouvoir rotatoire sur lequel sont représentés trois exemples de point caractéristique de basse concentration. L'axe des abscisses correspond à un indice de volume représentant le volume observé au noeud d'observation par rapport au volume total observé au noeud d'observation sur un cycle. L'axe des ordonnées correspond à la polarité.

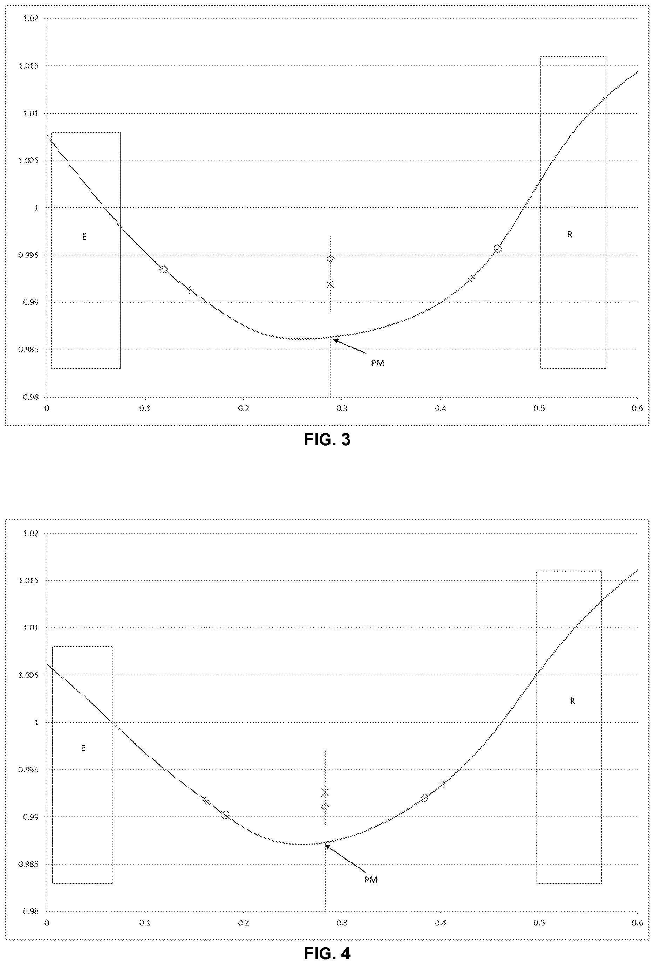

Les **figures 3** et **4** représentent un historique de densité obtenu lors de la mise en oeuvre d'un procédé selon l'invention dans lequel une contrainte de volume d'éluant maximal (**figure 3**) ou minimal (**figure 4**) a été imposée. Sur cet historique sont représentés la position de l'injection de l'éluant (PM), le point caractéristique d'adsorption (symbole « O » sur la partie droite de la figure), sa position cible (symbole « + » sur la partie droite de la figure), le point caractéristique de désorption (symbole « O » sur la partie gauche de la figure), sa position cible (symbole « + » sur la partie gauche de la figure), le point caractéristique de basse concentration (symbole « 0 ») et sa position cible (symbole « x »). L'axe des abscisses correspond au ratio de volume observé au noeud d'observation par rapport au volume total observé au noeud d'observation sur un cycle. L'axe des ordonnées correspond à la densité. La collecte de l'extrait est notée E, la collecte du raffinat est notée R.

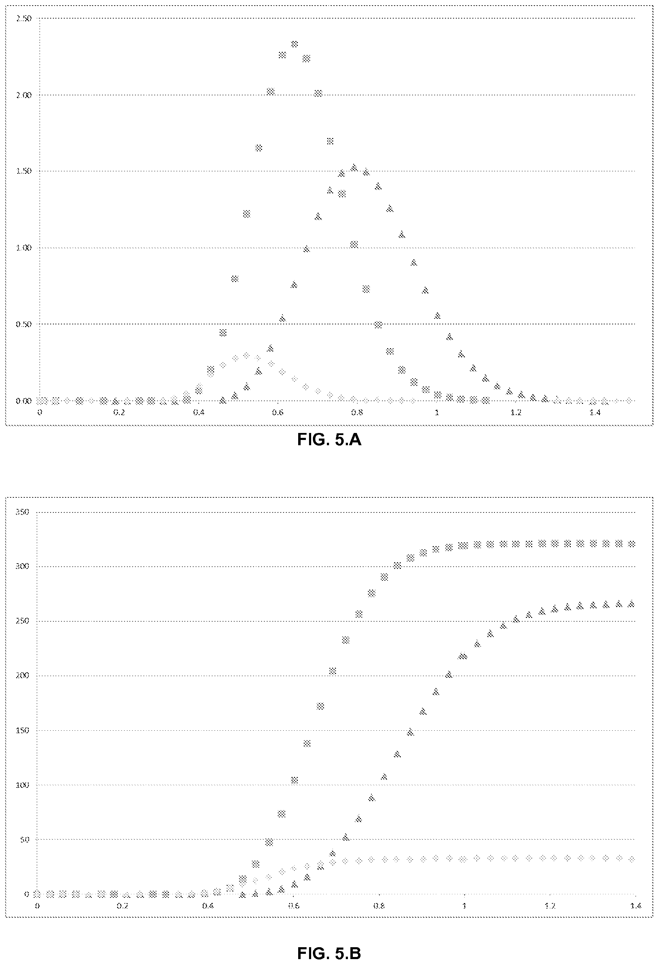

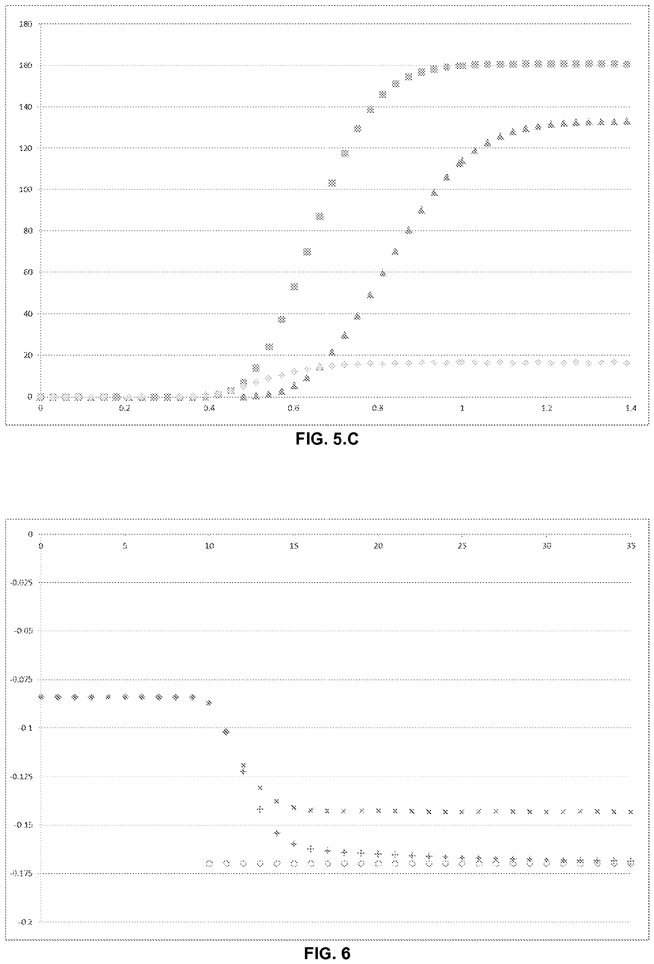

Les **figures 5.A**, **5.B** et **5.C** représentent les graphiques de concentration (en g/L) des espèces à séparer en fonction du ratio de volume d'avancement sur le volume de résine installé (volume de lit (BV)), obtenus par un modèle de simulation chromatographique conformément à la partie exemples ci-dessous, avec différentes quantités injectées. Les espèces suivis sont un mélange de polymères de glucose (DPn (degré de polymérisation) supérieur à 1) (courbe constituée de losanges), le glucose (courbe constituée de carrés) et le fructose (courbe constituée de triangles).

La **figure 5.A** représente le graphique de concentration obtenu lors d'un pulse de charge, la **figure 5.B** représente le graphique de concentration obtenu lors d'une saturation à haute concentration et la **figure 5.C** représente le graphique de concentration obtenu lors d'une saturation à basse concentration.

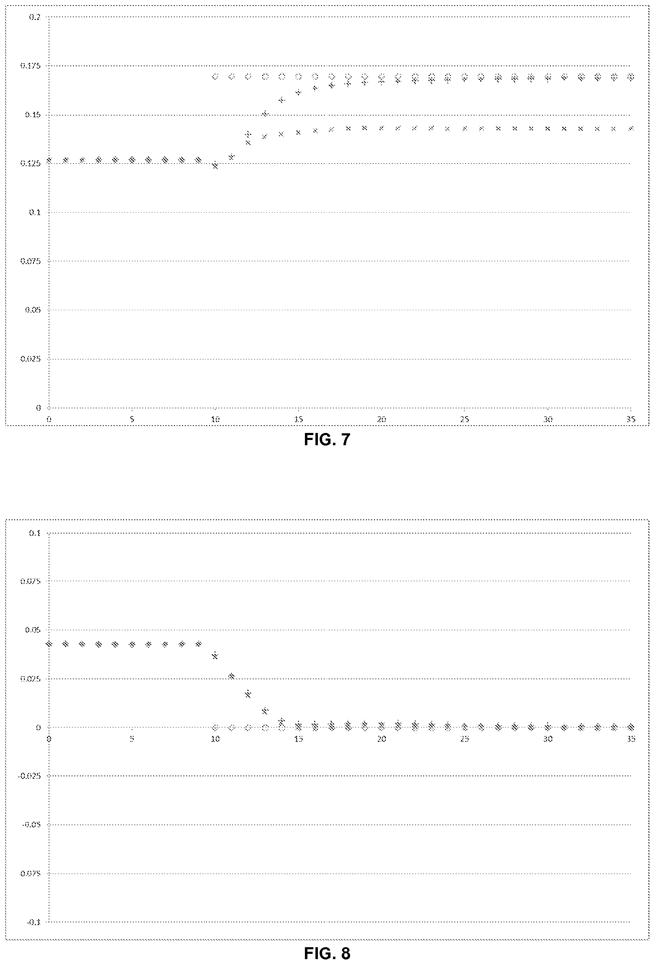

Les **figures 6, 7, 8** représentent l'évolution de la position des points caractéristiques de désorption **(Figure 6)**, d'adsorption **(Figure 7)**, de basse concentration **(Figure 8)** mesurés et de la position cible respective de chacun de ces points caractéristiques (en ratio de volume rapporté au volume de cycle, par rapport à la position moyenne d'injection de l'éluant) en fonction du nombre de cycles lors de la mise en oeuvre des procédés décrits dans l'exemple 1. La position cible du point caractéristique est représentée par le symbole « o », la position du point caractéristique mesurée lors de la mise en oeuvre du procédé régulé à l'aide des deux points caractéristiques d'adsorption et de désorption et sans contrainte de volume d'éluant est représentée par le symbole « + » et la position du point caractéristique mesurée lors de la mise en oeuvre du procédé régulé à l'aide du point caractéristique de basse concentration et avec une contrainte de volume d'éluant maximal est représentée par le symbole « x ».

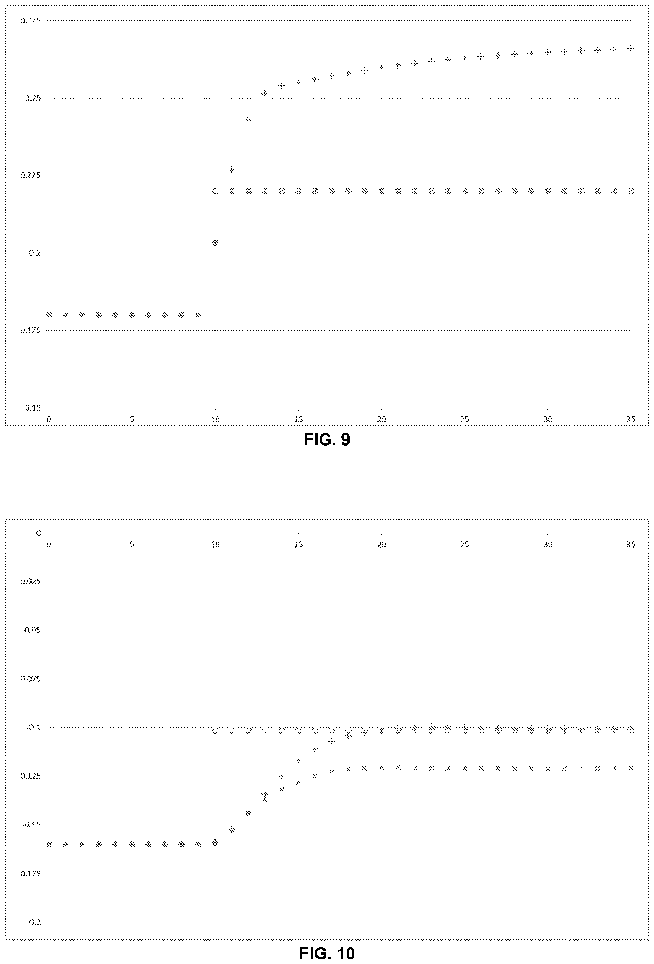

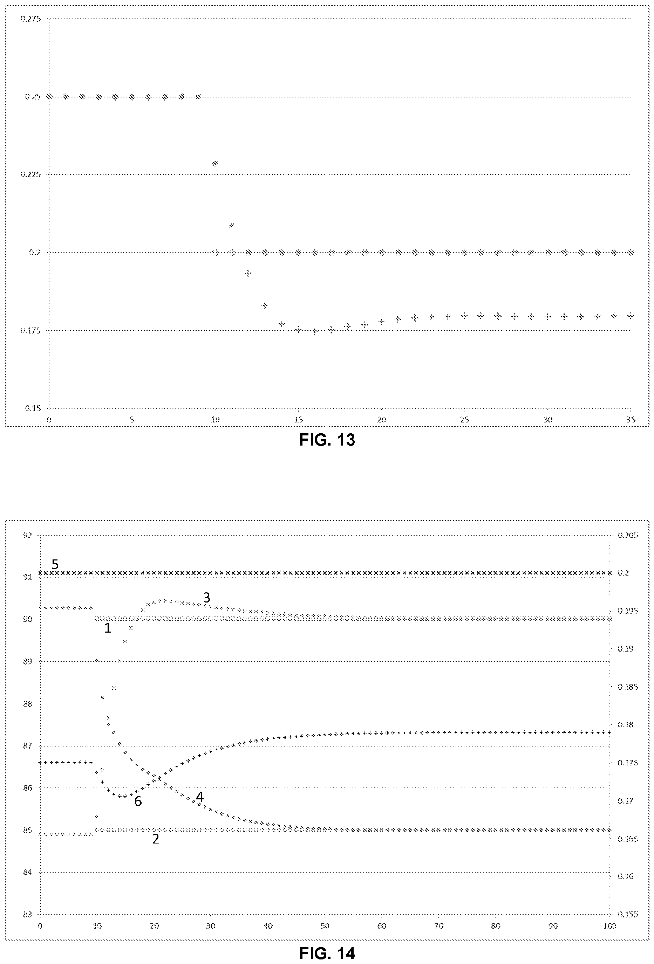

Les **figures 9** et **13** représentent la consommation d'éluant par cycle (en volume de lit (BV)) en fonction du nombre de cycles lors de la mise en oeuvre des procédés décrits dans les exemples 1 et 2. La valeur de la contrainte de volume d'éluant maximal **(Figure 9)** ou minimale **(Figure 13)** imposée est représentée par le symbole « o », la consommation réelle d'éluant par cycle lors de la mise en oeuvre du procédé régulé à l'aide des deux points caractéristiques d'adsorption et de désorption et sans contrainte de volume d'éluant est représentée par le symbole « + » et la consommation réelle d'éluant par cycle lors de la mise en oeuvre du procédé régulé à l'aide du point caractéristique de basse concentration et avec une contrainte de volume d'éluant représentée par le symbole « x ».

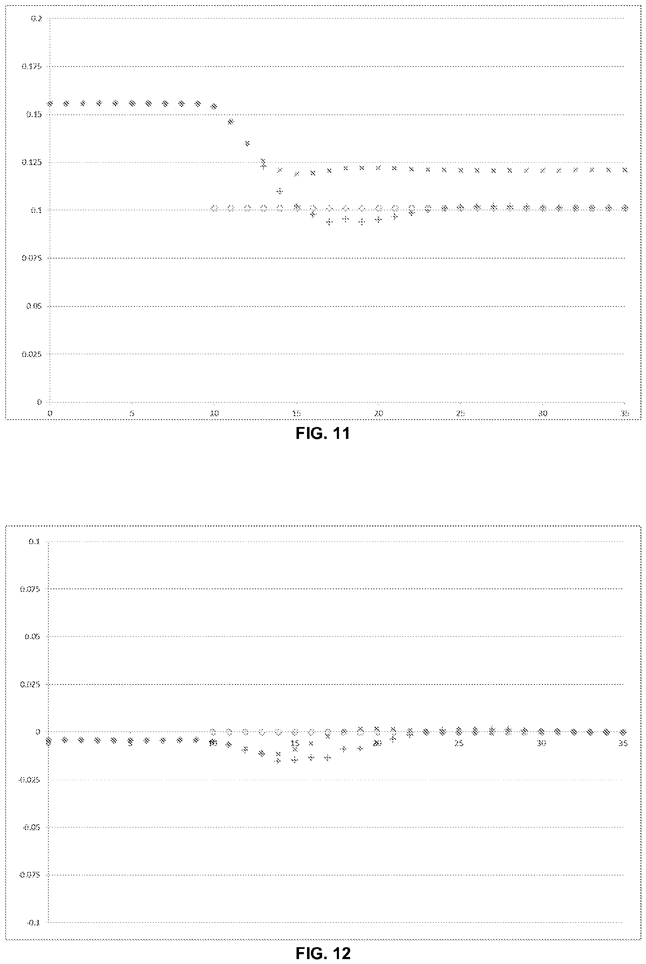

Les **figures 10, 11** et **12** présentent les mêmes données (représentées de la même manière) que les figures 6, 7 et 8, mais obtenues lors de la mise en oeuvre des procédés décrits dans l'exemple 2, les symboles « x » représentant la position du point caractéristique mesurée lors de la mise en oeuvre d'un procédé régulé à l'aide du point caractéristique de basse concentration et avec une contrainte de volume d'éluant minimal.

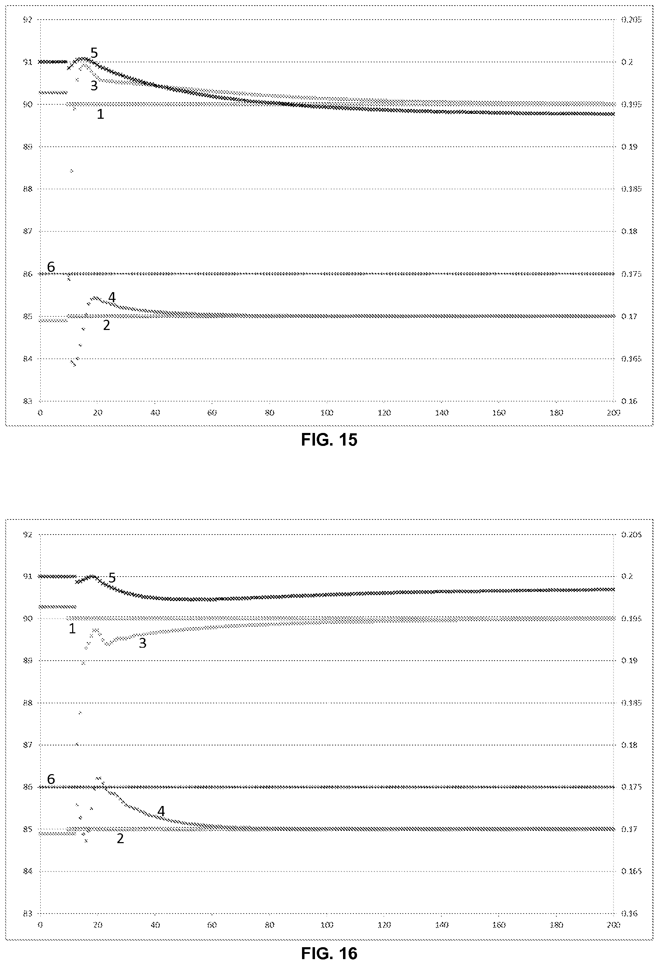

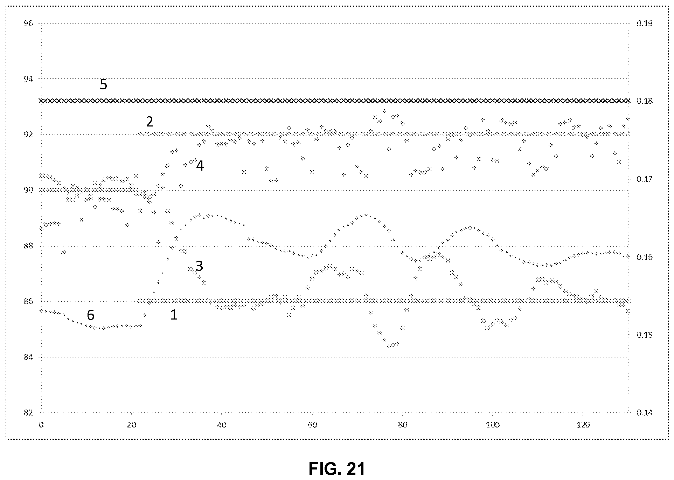

Les **figures 14, 15, 16, 17,18** et **21** représentent l'évolution de la pureté et du rendement (axe des ordonnées à gauche, en pourcentage) et l'évolution des volumes d'éluant et d'injection de mélange (axe des ordonnées à droite, en ratio de volume rapporté au volume de colonne (volume de lit - BV) en fonction du nombre de cycles lors de la mise en oeuvre du procédé décrit dans l'exemple 3 **(figure 14)**, l'exemple 4 **(figure 15)**, l'exemple 5 **(figures 16, 17 et 18)** et l'exemple 7 **(figure 21)**. La pureté cible est représentée par le symbole « □ » gris (courbe 1), le rendement cible est représenté par le symbole « ○ » gris (courbe 2), la pureté mesurée est représentée par le symbole « ■ » gris (courbe 3), le rendement mesuré est représenté par le symbole « ● » gris (courbe 4), le volume d'éluant injecté par cycle est représenté par le symbole « x » noir (courbe 5) et le volume de mélange à séparer injecté par cycle est représenté par le symbole « + » (courbe 6).

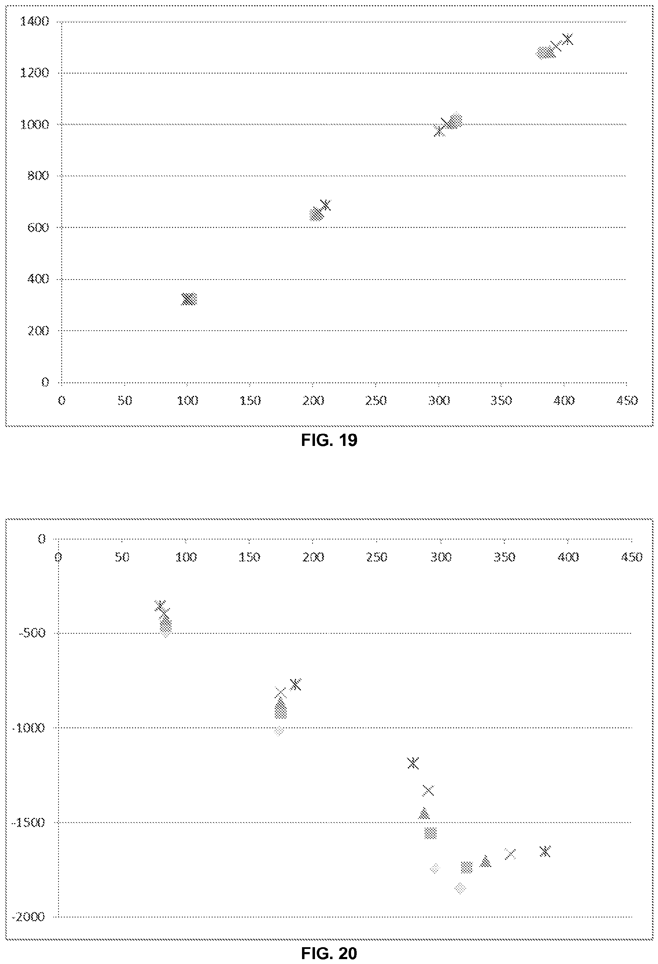

Les **figures 19** et **20** représentent l'évolution du pouvoir rotatoire du glucose **(figure 19)** et du fructose **(figure 20)** en fonction de la température et de la concentration de glucose **(figure 19)** et de fructose **(figure 20)** obtenue lors de la calibration du polarimètre de l'exemple 6. L'axe des abscisses correspond à la concentration de l'espèce (glucose ou fructose) en g/L. L'axe des ordonnées correspond au pouvoir rotatoire (ou angle de rotation). Les pouvoirs rotatoires sont mesurés à une température de 20°C (symbole « ♦ »), 35°C (symbole « ■ »), 45°C (symbole « ▲ »), 55°C (symbole « x ») et 65°C (symbole « ж »).

## DESCRIPTION DE MODES DE REALISATION DE L'INVENTION

L'invention est maintenant décrite plus en détail et de façon non limitative dans la description qui suit.

### Présentation générale du procédé de séparation chromatographique

Les trois aspects décrits dans la présente divulgation concernent un procédé de séparation d'un mélange dans un système comprenant un ensemble de plusieurs colonnes de chromatographie contenant une phase stationnaire, le procédé comprenant successivement, de manière cyclique, dans une partie donnée du système :

- une étape de collecte d'un raffinat, une étape d'injection du mélange à séparer, une étape de collecte d'un extrait et une étape d'injection de phase mobile.

Les différentes étapes ci-dessus se succèdent temporellement dans cette partie du système. La partie en question du système est de préférence située entre la sortie d'une colonne et l'entrée de la colonne suivante. Alternativement, la partie en question du système peut inclure une colonne ou une partie de colonne.

A un instant donné, une ou plusieurs des étapes ci-dessus peuvent être simultanément mises en oeuvre dans une ou plusieurs parties du système. Par exemple, toutes ces étapes peuvent être simultanément mises en oeuvre dans des parties respectives du système.

Par « *mélange à séparer* », on entend un mélange d'espèces (ou composés, dont notamment les molécules) contenant au moins deux espèces, par exemple au moins une espèce d'intérêt et au moins une impureté. Le mélange à séparer peut être binaire, lorsqu'il est composé de deux espèces, ou complexe, lorsqu'il est composé de plus de deux espèces. Le mélange à séparer peut être dilué dans une phase liquide, de préférence la phase mobile utilisée dans le procédé chromatographique.

Selon des modes de réalisation, le mélange à séparer comprend une ou plusieurs espèces choisies parmi :

- un sucre monosaccharide, par exemple le glucose, le fructose, le désoxyribose, le ribose, l'arabinose, le xylose, le lyxose, le ribulose, le xylulose, l'allose, l'altrose, le galactose, le gulose, l'idose, le mannose, le talose, le psicose, le sorbose ou le tagatose, et/ou un sucre polysaccharide, par exemple un galacto-oligosaccharide, un fructo-oligosaccharide ou un hydrolysat de bois, et/ou

- des protéines, et/ou
- des acides aminés, et/ou
- des acides organiques tels que de l'acide citrique, et/ou
- des sels minéraux, et/ou
- des espèces ionisées, et/ou
- des alcools et/ou des glycols, et/ou
- des acides organiques issus de milieux naturels ou enzymatiques ou fermentaires.

Cette liste est non-exhaustive, l'invention dans son intégralité peut s'effectuer sur des espèces chimiques à séparer quelles qu'elles soient.

Dans certains modes de réalisation, le mélange à séparer comprend un ou plusieurs monosaccharides. De préférence, l'extrait et le raffinat sont enrichis en des monosaccharides différents. Avantageusement, le monosaccharide comporte 5 ou 6 atomes de carbone. De préférence, le monosaccharide est choisi parmi le glucose, le fructose, le désoxyribose, le ribose, l'arabinose, le xylose, le lyxose, le ribulose, le xylulose, l'allose, l'altrose, le galactose, le gulose, l'idose, le mannose, le talose, le psicose, le sorbose, le tagatose et un mélange de ceux-ci. Dans certains modes de réalisation particulièrement avantageux, le mélange à séparer comprend du glucose et du fructose.

Le procédé selon le premier aspect est particulièrement avantageux dans un tel cas, car la consommation de l'éluant représente un coût significatif dans la séparation de ces monosaccharides.

Dans le présent texte, les termes « *mélange à séparer* », « *charge* », « *mélange à traiter* », « *produit à purifier* » et « *mélange initial* » désignent la même chose. Les termes « *phase mobile* » et « *éluant* » désignent la même chose dans le présent texte.

Par « *raffinat* », on entend une fraction enrichie en espèces moins retenues par la phase stationnaire. Dans le cas d'un mélange initial binaire, il s'agit de la fraction enrichie en espèce la moins retenue.

Par « *extrait* » on entend une fraction enrichie en espèces plus retenues par la phase stationnaire. Dans le cas d'un mélange initial binaire, il s'agit de la fraction enrichie en espèce la plus retenue.

Les colonnes chromatographiques sont de préférence disposées en série et en boucle fermée, une sortie d'une colonne étant reliée à une entrée de colonne suivante, la sortie de la dernière colonne étant reliée à l'entrée de la première colonne.

Les colonnes peuvent également être appelées « *cellules* » de chromatographie. Elles peuvent être utilisées dans un système de carrousel, disposées les unes à côté des autres, ou encore disposées les unes au-dessus des autres au sein d'une ou deux tours afin de limiter l'encombrement au sol.

Les colonnes peuvent contenir une phase stationnaire liquide ou solide. L'éluant peut être un fluide à l'état gazeux, liquide voire supercritique. Des lignes d'injection de mélange à séparer et d'éluant sont prévues en entrée des différentes colonnes, et des lignes de collecte d'extrait et de raffinat sont prévues en sortie des colonnes. De préférence les lignes d'injection et de collecte sont connectées sur des lignes de connexion entre deux colonnes successives.

Dans certains modes de réalisation avantageux, le système comprend aussi des organes de séquençage des lignes d'injection et de collecte. En particulier, le séquençage de ces lignes d'injection et de collecte a lieu sur un cycle de fonctionnement du système. Dans le présent texte, un « *cycle de fonctionnement* » ou « *cycle* » désigne la durée au bout de laquelle les lignes d'injection et de collecte ont été séquencées jusqu'à revenir à leur position initiale dans le système. Au bout d'un cycle, le système est à nouveau dans sa configuration initiale. Un cycle comporte en général autant de périodes que de colonnes dans la boucle de séparation. Ainsi le cycle d'un procédé mis en oeuvre sur un système à 8 colonnes est composé de 8 périodes.

Le déplacement des lignes de collecte (d'extrait et raffinat) et des lignes d'injection (de charge et de phase mobile) dans le système est également appelé commutation des lignes dans la présente description.

On peut généralement définir quatre zones dans le système (notamment lorsque le procédé mis en oeuvre est un procédé SMB, comme décrit ci-dessous) :

- la zone 1 située entre la ligne d'injection d'éluant et la ligne de collecte de l'extrait,
- la zone 2 située entre la ligne de collecte de l'extrait et la ligne d'injection de mélange à séparer,
- la zone 3 située entre la ligne d'injection de mélange à séparer et la ligne de collecte du raffinat, et
- la zone 4 située entre la ligne de collecte du raffinat et la ligne d'injection d'éluant.

Le procédé selon l'invention est avantageusement un procédé chromatographique périodique à accumulation.

Par « *procédé à accumulation* », on entend un procédé chromatographique dans lequel l'injection du mélange à séparer est intercalée ou additionnée à un profil de concentration non nulle passant de la sortie à l'entrée d'une colonne.

Des exemples de tels procédés à accumulation sont le procédé SMB, le procédé VariCol, le procédé Powerfeed, le procédé ModiCon, le procédé iSMB ou le procédé SSMB.

Le procédé à Lit Mobile simulé (ou SMB) est un procédé multi-colonne continu, l'injection de mélange à séparer étant effectuée sur l'ensemble d'un cycle.

Le procédé SMB peut être notamment un procédé SMB à quatre zones. Dans ce cas, le système comporte un ensemble de colonnes montées en série et en boucle fermée, la sortie d'une colonne étant reliée à une entrée de colonne suivante. Le système comprend au moins une ligne d'injection de mélange à séparer, une ligne de collecte d'une fraction enrichie en espèce peu retenue par la phase stationnaire (le raffinat), une ligne d'injection d'un éluant et une ligne de collecte d'une fraction enrichie en espèce plus retenue par la phase stationnaire (l'extrait). Les lignes d'injection (de mélange à séparer et d'éluant) et les lignes de collecte de fractions se déplacent périodiquement et de manière synchrone (séquençage synchrone) au sein de la boucle dans la direction de l'écoulement du fluide circulant à travers la boucle. La durée entre deux décalages de l'ensemble des lignes d'injection et de collecte d'une colonne correspond à une période ; au bout d'un cycle tous les points sont revenus à leur position initiale, le système ayant un fonctionnement cyclique. Un cycle comporte autant de périodes que de colonnes.

Le procédé selon l'invention peut être un procédé à injection continue du mélange à séparer (c'est-à-dire un procédé dans lequel l'injection du mélange à séparer est un flux continu). L'injection du mélange à séparer est alors effectuée pendant toute la durée du cycle. Le procédé selon l'invention peut également être un procédé à injection quasi-continue du mélange à séparer. Dans certains modes de réalisation particulièrement avantageux, le procédé selon l'invention est un procédé SMB, de préférence un procédé SMB à quatre zones.

Alternativement, le procédé selon l'invention peut être un procédé dans lequel l'injection du mélange à séparer est discontinue. Dans ces procédés, l'injection du mélange à séparer n'est pas faite sur l'ensemble d'un cycle mais pendant une durée totale inférieure à un cycle. On peut citer comme procédé à injection discontinue de mélange à séparer le procédé iSMB (« *Improved Simulated Moving Bed* » ou SMB amélioré en français), décrit dans les documents EP 0342629 et US 5,064,539. Dans ce procédé, dans une étape le système fonctionne en boucle fermée, sans injection ou collecte de produit. On peut également citer le procédé SSMB *(« Sequential Simulated Moving Bed »* ou SMB séquentiel en français) dont le séquentiel multi-colonne est par exemple décrit dans le document WO 2015/104464. De préférence, le procédé selon l'invention, lorsqu'il est à injection discontinue de mélange à séparer, est un procédé SSMB.

Procédé de régulation

Le procédé selon le premier aspect (ne représentant pas l'invention) comprend:

- la détermination, en un noeud du système, de l'historique d'une variable représentative de la concentration d'une ou plusieurs espèces contenues dans le mélange à séparer ;
- la détection sur ledit historique d'un point caractéristique entre le début d'une étape de collecte de l'extrait et la fin de l'étape suivante de collecte du raffinat ;
- la comparaison de la position du point caractéristique par rapport à une position cible ;
- l'ajustement du volume porteur du point caractéristique, modifiant la position du point caractéristique pour rapprocher la position du point caractéristique de la position cible ;
- le volume de la phase mobile injecté par cycle étant maintenu supérieur à une borne minimale et/ou inférieur à une borne maximale.

Par « *noeud du* système » ou « *noeud d'observation* », on entend un point physique du système de chromatographie qui peut être librement choisi.

Dans certains modes de réalisation du procédé, le noeud d'observation est situé entre la sortie d'une colonne et l'entrée de la colonne suivante dans le système.

On appelle « *historique* », l'état ou l'évolution d'une variable représentative de la concentration d'une ou plusieurs espèces contenues dans le mélange à séparer en mouvement dans le système, cet état étant considéré pendant une durée ou un temps déterminé au noeud d'observation. Ainsi, on peut mesurer l'évolution d'une variable représentative de la concentration d'une ou plusieurs espèces contenues dans le mélange à séparer s'écoulant au noeud d'observation. Un historique peut être représenté :

- comme une évolution en fonction du temps, par exemple de façon non limitative exprimé en temps brut, ou en temps écoulé par rapport au début du cycle ou ramené au temps de cycle total ;
- comme une évolution en fonction de l'intégration dans le temps d'un débit liquide, préférentiellement le débit s'écoulant au noeud d'observation, par exemple de façon non limitative exprimé en volume brut, ou en volume écoulé par rapport au début du cycle ou ramené à un autre volume (volume d'une colonne ou volume de cycle total), cette méthode étant particulièrement intéressante dans le cas où les débits sont variables au cours de la période ou du cycle ;

- comme une évolution plus générale d'un indicateur d'avancement dans le cycle.

L'historique peut être ainsi temporel, volumique ou dépendant d'un paramétrage du cycle du procédé.

Un historique est différent d'un profil de concentration. On appelle « *profil de concentration* » l'état de concentration des fractions du fluide s'écoulant dans le système, cet état étant considéré à un instant donné sur l'ensemble du système. Le document FR 2699917 cité au début de la présente description décrit des étapes permettant de reconstituer un profil de concentration.

La durée pendant laquelle on détermine l'état de la variable, c'est-à-dire pendant lequel on détermine l'historique, est par exemple un cycle de fonctionnement. A la fin du cycle, l'historique peut être réinitialisé et recommencé. La durée peut aussi être plus courte qu'un cycle de fonctionnement.

Comme indiqué ci-dessus, l'abscisse d'un historique peut s'exprimer de façon non limitative en différentes unités :

- le temps brut : l'axe part alors de 0 et se termine à la fin effective du temps de cycle ;
- le temps réduit, défini par le temps brut divisé par le temps de cycle : dans ce cas, l'axe de l'historique est toujours entre 0 et 1 ;
- un indice d'avancement dans le cycle : c'est la généralisation du temps brut divisé par le temps de cycle ; cela est intéressant dans le cas où il y aurait des arrêts programmés de débits d'élution dont la durée peut être variable ;
- un indice de volume correspondant au volume observé au noeud du système divisé par le volume total observé au noeud d'observation.

Dans des modes de réalisation avantageux, le système chromatographique comprend un détecteur, et éventuellement une pluralité de détecteurs, positionné(s) au noeud du système où l'historique de la variable représentative de la concentration d'une ou plusieurs espèces contenues dans le mélange à séparer est obtenu.

Le détecteur peut être par exemple un densimètre, un polarimètre, un conductimètre, un réfractomètre, un spectromètre infrarouge, proche infrarouge, Raman ou UV/visible ou un appareil de résonance magnétique nucléaire en ligne.

Les détecteurs peuvent être situés sur le système, à savoir sur les lignes même du système ; pour cela on peut envisager que le fluide circule au travers des détecteurs. Cela est avantageux pour des faibles débits de fluide dans le système. Pour des débits plus importants, il peut être préférable de déporter les détecteurs des lignes. Pour cela on effectue des dérivations sur lesquelles les détecteurs sont placés.

Le procédé comprend une étape de détermination, en un noeud du système, de l'historique d'une variable représentative de la concentration d'une ou plusieurs espèces contenues dans le mélange à séparer. Ainsi, on détermine l'état d'une variable représentative de la concentration d'une ou plusieurs espèces, au moyen d'un ou plusieurs détecteurs tels que décrits ci-dessus.

Cette variable peut être la concentration d'une ou plusieurs espèces du mélange si les détecteurs le permettent. Dans d'autres modes de réalisation, lors de cette étape, la variable représentative de la concentration d'une ou plusieurs espèces n'est pas la concentration elle-même ni la pureté elle-même des fractions. Cela présente l'avantage de réguler le fonctionnement plus rapidement que si une concentration ou une pureté devait être mesurée (une telle mesure pouvant être complexe et donc longue). Par ailleurs, étant donné qu'il n'est pas nécessaire de mesurer la pureté ou la concentration, il n'est pas nécessaire d'étalonner le détecteur et le procédé selon l'invention peut ainsi tolérer une dérive du ou des détecteurs utilisés.

Il n'est pas nécessaire de dresser physiquement un historique, par exemple par visualisation ou impression de l'historique. Une régulation directe sans enregistrement ni visualisation peut suffire. De préférence, l'étape de détermination de l'historique est réalisée en un seul noeud, ce qui permet de limiter l'utilisation de détecteurs et d'éviter d'avoir à considérer la synchronisation des détecteurs, la synchronisation pouvant de plus évoluer dans le temps dans le cas par exemple d'un changement d'état d'une des colonnes du système.

Les variables représentatives de la concentration d'une ou plusieurs espèces contenues dans le mélange à séparer sont de préférence des variables pouvant être obtenues rapidement et directement, au contraire par exemple de la concentration qui nécessite souvent une calibration préalable. Ainsi, à titre d'exemple de variable spécifique, on peut citer :

- le pouvoir rotatoire, obtenu par exemple par le signal renvoyé par un détecteur polarimétrique, utilisable dans le cas où les espèces du mélange à séparer sont optiquement actifs, par exemple des énantiomères ;
- l'absorbance ou l'émission d'un rayonnement spectroscopique, obtenue par exemple par le signal renvoyé par un détecteur spectroscopique par exemple à rayonnements UV/visible ou infrarouge, utilisable lorsque les espèces du mélange à séparer sont des molécules naturelles ou de synthèse possédant des groupements chimiques détectables, notamment des biomolécules telles que les protéines ou peptides ;

- l'indice de réfraction, la densité, la conductivité ou le pH, obtenus par exemple par le signal renvoyé par des détecteurs mesurant de telles grandeurs physiques, utilisable par exemple dans le cas où le mélange à séparer contient des sucres, des espèces ioniques, des acides ou des bases ;
- la combinaison de plusieurs variables spécifiques citées ci-dessus,
- une ou plusieurs variables obtenues à partir d'autres détecteurs.

Les variables représentatives de la concentration données ci-dessus à titre d'exemple sont des variables pour lesquelles on peut obtenir facilement un historique. Les historiques de ces variables peuvent être obtenus en temps réel, ce qui rend le procédé efficace. Les historiques traduisent l'évolution des concentrations au noeud d'observation, et ce, sous la forme d'un signal qui peut facilement être obtenu avec un suivi par détecteur.

Le procédé de séparation comprend également une étape de détection d'un point caractéristique sur l'historique, appelé « *point caractéristique de basse concentration* » dans la présente description. Cette étape permet, à partir de la détermination de la variable représentative de la concentration, de définir un point révélateur du procédé de séparation. Selon certains modes de réalisation, le point caractéristique n'est pas une valeur précise de la variable mais est révélateur d'un phénomène en circulation au noeud d'observation. Le point caractéristique est révélateur d'un comportement relatif des espèces circulant au noeud d'observation.

Le noeud d'observation est positionné en sortie d'une colonne du système. Pendant le cycle, les lignes (de collecte du raffinat, injection du mélange à séparer, collecte de l'extrait et injection de phase mobile) et les zones se déplacent d'une colonne à l'autre et lesdites lignes et zones se trouvent donc à des instants précis à côté (ou au voisinage) du noeud d'observation, c'est-à-dire entre les mêmes colonnes successives que le noeud d'observation. Sur l'historique, il est possible de définir des instants et des durées correspondant au passage des lignes (collecte du raffinat, injection du mélange à séparer, collecte de l'extrait et injection de phase mobile) au voisinage du noeud d'observation. Il est alors possible de repérer sur l'historique les intervalles ou les points moyens des positions (appelés aussi positions moyennes) de collecte du raffinat, d'injection du mélange à séparer, de collecte de l'extrait et d'injection de phase mobile ainsi que les zones que ces intervalles et points moyens déterminent.

Le point caractéristique de basse concentration est situé entre le début d'une étape de collecte de l'extrait et la fin de l'étape suivante de collecte du raffinat.

De préférence, sur l'historique, ledit début de l'étape de collecte de l'extrait et ladite fin de l'étape suivante de collecte du raffinat encadrent une étape d'injection de phase mobile. Dans le cas d'un procédé à quatre zones, comme décrit ci-dessus, le point caractéristique de basse concentration est situé soit dans la zone 1, soit dans la zone 4, soit à l'interface entre ces deux zones (c'est-à-dire que, à l'instant correspondant au point caractéristique, le noeud d'observation est situé soit dans la zone 1 du système, soit dans la zone 4, soit à l'interface entre ces deux zones c'est-à-dire à la position moyenne d'injection de l'éluant).

Dans des modes de réalisation, la détection du point caractéristique sur l'historique a lieu entre la fin d'une étape de collecte de l'extrait et le début de l'étape suivante de collecte du raffinat.

Dans des modes de réalisation, la détection du point caractéristique a lieu dans une portion de l'historique dans laquelle la densité et/ou la concentration totale des espèces est inférieure ou égale à 25 % de la densité ou, respectivement, de la concentration, totale maximale du mélange à séparer.

La détection du point caractéristique de basse concentration correspond à la détection de la position globale de l'ensemble formé par le front d'adsorption et le front de désorption sur l'historique, alors que dans le document WO 2007/101944, les positions des deux fronts sont individuellement détectées et utilisées pour effectuer le contrôle des positions des fronts d'adsorption et de désorption.

Par « *front d'adsorption* », on entend une augmentation de concentration observée en sortie de colonne, en particulier lorsque la concentration augmente d'une valeur faible à une valeur proche du maximum de concentration détecté sur un cycle. La concentration peut être la concentration d'une espèce du mélange à séparer ou la concentration de l'ensemble des espèces présentes.

Par « *front de désorption* », on entend une diminution de concentration observée en sortie de colonne, en particulier lorsque la concentration diminue d'une valeur proche du maximum de concentration détecté sur un cycle à une valeur faible. La concentration peut être la concentration d'une espèce du mélange à séparer ou concentration de l'ensemble des espèces présentes.

Le point caractéristique de basse concentration peut être, par exemple :

- le minimum de l'historique, c'est-à-dire le point de signal minimum tel que détecté entre la collecte de l'extrait et la collecte du raffinat, ou un minimum local ; ce point peut être mesuré par un minimum de signal d'un densimètre, d'un détecteur UV, mais aussi par le minimum de la valeur absolue du signal d'un polarimètre ;
- le point de l'historique ayant une valeur déterminée, par exemple la valeur zéro, notamment lorsque la variable représentative de la concentration est le pouvoir rotatoire et que les espèces à séparer ont des pouvoirs rotatoires de signes opposés ;

- un point calculé comme un intermédiaire entre deux points correspondant à des valeurs prédéterminées sur l'historique ; les valeurs prédéterminées pouvant par exemple correspondre à un seuil du signal d'un densimètre ou d'un détecteur UV, mais aussi à un seuil de la valeur absolue du signal d'un polarimètre ; le point caractéristique peut être par exemple un barycentre et notamment l'isobarycentre (temporel ou volumique) de deux points de l'historique correspondant à des valeurs prédéterminées ;
- un point calculé comme un intermédiaire entre deux points correspondant à des valeurs définies de manière relative sur l'historique ; ces valeurs peuvent notamment correspondre à des fractions respectives des valeurs atteintes en des maxima ou minima locaux de l'historique ; ainsi le point caractéristique peut être un barycentre et notamment l'isobarycentre (temporel ou volumique) entre deux points correspondant à de telles valeurs définies, et notamment entre deux points qui sont respectivement un point caractéristique du front d'adsorption et un point caractéristique du front de désorption ; l'avantage de cette méthode est que ces deux points caractéristiques peuvent être calculés selon deux détecteurs différents.

Les **figures 1 et 2** présentent des exemples de point caractéristique de basse concentration détectés à partir d'un historique. La **figure 1** correspond à un historique de densité (trait noir), obtenu par un densimètre, entre la collecte de l'extrait (notée E) et celle du raffinat (notée R). Trois exemples de point caractéristique de basse concentration sont présentés. Un premier exemple de point caractéristique de basse concentration, noté 1, est le point correspondant à la densité minimale. Un deuxième exemple est le point noté 2 dont l'abscisse est l'isobarycentre des abscisses des deux points de l'historique correspondant à une valeur de densité prédéterminée de 1,05. Un troisième exemple est le point noté 3 dont l'abscisse est l'isobarycentre des abscisses de deux points obtenus par seuil relatif à 20% : le premier point est défini par l'abscisse telle que la densité est à 20% entre la densité minimum observée et la densité mesurée au début de collecte d'extrait ; le second point est défini réciproquement par l'abscisse telle que la densité est à 20% entre la densité minimum observée et la densité mesurée à la fin de la collecte de raffinat. La position moyenne de l'injection de la phase mobile est notée PM.

La **figure 2** correspond à un historique de pouvoir rotatoire, obtenu par un polarimètre, entre la collecte de l'extrait (notée E) et celle du raffinat (notée R). Trois exemples de point caractéristique de basse concentration sont présentés. Un premier exemple de point caractéristique de basse concentration est le point noté 1 où le pouvoir rotatoire mesuré est nul. Un deuxième exemple est le point noté 2 dont l'abscisse est l'isobarycentre des abscisses des deux points correspondant à une valeur seuil de la valeur absolue de pouvoir rotatoire. Un troisième exemple est le point noté 3 dont l'abscisse est l'isobarycentre des abscisses du point correspondant à un pouvoir rotatoire égal à 50% du maximum de pouvoir rotatoire et du point correspondant à un pouvoir rotatoire égal à 50% du minimum de pouvoir rotatoire. La position de l'injection de la phase mobile est notée PM.

La position du point caractéristique est une donnée permettant de stabiliser les puretés et rendements du système.

Comme indiqué ci-dessus, un avantage du procédé est que l'historique peut être déterminé sur une durée inférieure à un cycle. En effet, il suffit de détecter le point caractéristique pour passer ensuite à l'étape suivante de la régulation. De préférence toutefois, l'étape de détermination est effectuée sur un cycle complet. Par ailleurs, les étapes de détermination de l'historique et de détection du point caractéristique peuvent être mises en oeuvre à une fréquence correspondant à un nombre entier de cycles (tous les n cycles, n étant supérieur ou égal à 1). Plus les étapes de détermination de l'historique et de détection du point caractéristique sont fréquemment mises en oeuvre, plus le réglage du fonctionnement du système est précis.

Le procédé comprend également une étape de comparaison de la position du point caractéristique avec une position cible.

La détection du point caractéristique peut être assimilée à la détermination du temps (ou du volume écoulé, ce dernier correspondant à l'intégration du débit dans le temps) où le point caractéristique apparaît au noeud d'observation pendant la durée de l'historique, par exemple un cycle ; la position cible correspond alors au temps (ou au volume) où le point caractéristique devrait apparaître au noeud d'observation pour permettre un fonctionnement dans les conditions souhaitées.

Sur un historique correspondant à l'évolution dans le temps d'une variable représentative de la concentration d'une ou plusieurs espèces contenues dans le mélange à séparer, l'étape de comparaison de la position du point caractéristique avec une position cible consiste à comparer l'abscisse du point caractéristique avec une abscisse cible prédéterminée. Cela permet de déterminer si une perturbation est intervenue dans le système. Dans un système convenablement réglé, de préférence sans perturbation et en régime établi, la position du point caractéristique coïncide avec la position cible. Si le système n'est pas perturbé, le point caractéristique apparaît à un noeud d'observation sensiblement au même moment à chaque cycle. La différence entre la position du point caractéristique et la position cible peut alors correspondre à une différence de temps de passage au noeud d'observation.

La position cible du point caractéristique de basse concentration peut être définie de façon absolue dans le cycle ou bien relativement à l'étape de l'injection de phase mobile, et/ou relativement à une étape de collecte de fraction, raffinat et/ou extrait.

Le procédé comprend également une étape d'ajustement du volume porteur du point caractéristique, modifiant la position du point caractéristique pour rapprocher la position du point caractéristique de la position cible, s'il apparait une différence entre la position du point caractéristique et la position cible. En d'autres termes, une différence entre la position du point caractéristique et la position cible correspond à un écart ou à une perturbation de fonctionnement du système que l'on peut compenser en ajustant uniquement le volume porteur du point caractéristique.

Par « *volume porteur d'un front de concentration* », on entend au sens de la présente invention le volume porteur d'un front sur lequel se situe le point caractéristique ou au voisinage duquel se situe le point caractéristique.

Dans un procédé à quatre zones comme décrit ci-dessus, il peut s'agir du volume porteur de la zone 1 (ou zone de désorption), ou du volume porteur de la zone 4 (ou zone d'adsorption). Par « *volume porteur d'une zone* », on entend le volume circulant dans la zone en question entre deux commutations de ligne. Ce volume est le produit du débit de fluide circulant dans la zone et de la période, il peut également être l'intégration dans le temps du débit entre deux commutations de lignes lorsque le débit n'est pas constant au cours de la période. Lorsque le volume de phase mobile de la zone 1 est modifié, la position du front de désorption présent dans la zone 1 est également modifiée. De même, le volume de la zone 4 est porteur du front d'adsorption et une modification du volume de la zone 4 modifiera la position du front d'adsorption.

Par « *volume porteur du point caractéristique* », on entend au sens de la présente invention un volume dont la variation modifie la position du point caractéristique. En observant les **figures** 1 et **2**, une modification du volume de la zone 1 changera la position du front entre le début de la collecte de l'extrait et le point moyen d'injection d'éluant et modifiera la position du point caractéristique du front de désorption. Et réciproquement, une modification du volume de la zone 4 changera la position du front entre le point moyen d'injection d'éluant et la fin de la collecte du raffinat, modifiant ainsi la position du point caractéristique du front d'adsorption.

Une modification du volume porteur du point caractéristique peut être effectuée en modifiant un ou plusieurs débits d'injection et/ou de collecte ; et/ou en modifiant la durée entre les commutations de lignes ; et/ou en modifiant la durée d'une ou plusieurs injections et/ou collectes. De préférence, la modification du volume porteur du point caractéristique est effectuée en modifiant un ou plusieurs débits d'injection et/ou de collecte ou la durée entre les commutations de lignes.

Pour modifier le volume porteur du point caractéristique, on peut par exemple modifier le débit dans la zone 1, ou le débit dans la zone 4. Le débit sera par exemple augmenté si la position du point caractéristique est située après la position cible (c'est-à-dire si l'abscisse du point caractéristique est située après l'abscisse prédéterminée comme position cible) ou réduit si la position du point caractéristique est située avant la position cible.

De préférence, le volume porteur du point caractéristique est réglé sans que le volume d'injection de phase mobile soit modifié. Le volume de phase mobile injecté par cycle peut alors rester constant lors de l'utilisation du procédé. Cela est particulièrement utile lorsqu'une contrainte de volume de phase mobile est fixée. Ainsi, lorsque le volume de phase mobile injecté par cycle atteint la borne extrémale fixée (qu'il s'agisse d'une borne minimale ou maximale), ce volume reste constant à cette borne. La modification du volume porteur de la zone d'adsorption (zone 4), par exemple par une modification du débit de la collecte de raffinat, revient alors à modifier d'autant, le volume porteur de la zone de désorption (zone 1), et vice-versa.

Ainsi, l'ajustement du volume porteur du point caractéristique permet de faire varier le passage des espèces dans la zone dont le volume porteur est modifié. Le point caractéristique peut être en avance par rapport au point cible (c'est-à-dire le point dont l'abscisse est la position cible). En réduisant le volume porteur du point caractéristique, on peut freiner la circulation des espèces, et retarder le point caractéristique de sorte à le rapprocher du point cible. Inversement, si le point caractéristique est en retard par rapport au point cible, on augmente le volume porteur du point caractéristique pour accélérer la circulation des espèces, et accélérer le point caractéristique de sorte à le rapprocher du point cible. Si le point caractéristique est stabilisé au point cible, cela signifie qu'il n'y a alors pas d'ajustement à effectuer. On peut aussi envisager de prévoir un seuil de différence entre la position du point caractéristique et la position cible, l'ajustement est alors effectué si la différence observée dépasse le seuil.

Une régulation telle que décrite ci-dessus peut être par exemple une régulation PID (régulation Proportionnelle, Intégrale, Dérivée) agissant sur le volume porteur du point caractéristique.

Dans un procédé à quatre zones, il convient de distinguer les termes « *volume porteur d'une zone* » (appelé aussi « *volume d'une zone* » ou « *volume de phase mobile d'une zone* »), « *volume de phase mobile* » et « *volume de phase mobile injectée* ».

Ainsi (et comme expliqué ci-dessus), le volume de zone 1 correspond au volume de la phase mobile qui traverse sur une période la ou les colonnes propres à la zone 1, situées entre la ligne d'injection d'éluant et la ligne de collecte d'extrait. D'une manière similaire, on peut définir un volume pour chaque zone du système (pour la zone 2, pour la zone 3 et pour la zone 4). Comme indiquée ci-dessus, la modification d'un volume de zone est effectuée de préférence soit par une modification du débit, soit par une modification de la durée entre deux commutations des lignes qui encadrent ladite zone. Cela peut modifier le volume de phase mobile injecté ou le volume de phase mobile des collectes. Par exemple, une variation du volume de zone 4 en laissant constant les volumes de la zone 3 et de la zone 1 est équivalente à une variation du volume de collecte du raffinat et du volume de phase mobile injecté.

Le terme de « *volume de phase mobile* » est un terme générique désignant la phase mobile traversant une colonne.

Par contre, le « *volume de phase mobile injecté* » ou « *volume de phase mobile injecté par cycle* » correspond au volume d'éluant frais injecté entre la zone 4 et la zone 1 (dans un procédé à quatre zones). C'est ce volume que l'invention se propose de contrôler.

Le procédé de régulation décrit dans le document WO 2007/101944 permet de réguler individuellement les volumes de phase mobile des zones 1 et 4 qui sont les volumes porteurs des points caractéristiques des zones 1 et 4 (points caractéristiques de désorption et d'adsorption). Cela ne permet pas de contrôler précisément le volume de phase mobile injecté par cycle.

Dans le procédé selon l'invention, lorsqu'une contrainte de volume de phase mobile injecté par cycle est rencontrée (c'est-à-dire lorsqu'une borne maximale et/ou minimale est atteinte), la régulation est effectuée en apportant une même correction au volume de la zone 1 et au volume de la zone 4 (lorsque le procédé est un procédé à quatre zones). La régulation porte ainsi sur une grandeur appelée « *volume porteur du point de basse concentration* » qui peut être, dans le cas d'un procédé à quatre zones, le volume de la zone 1 ou le volume de la zone 4 ou une combinaison des deux. Dans un tel cas, une variation apportée au volume de la zone 1 et de la zone 4 modifiera le volume de collecte du raffinat et/ou de l'extrait mais pas le volume de phase mobile injecté.

L'avantage du procédé décrit ici est qu'il permet à la fois de réagir rapidement aux perturbations du système et de contrôler la quantité de phase mobile injectée à chaque cycle de fonctionnement, contrairement aux procédés décrits dans l'art antérieur. D'une manière générale, les procédés basés sur l'analyse de la composition de fractions collectées ne permettent pas de réagir rapidement à des perturbations dont les effets mettent plusieurs cycles à se stabiliser. De plus, dans certains cas, le délai d'analyse et d'obtention des valeurs de puretés est long. Le délai d'analyse des compositions est d'autant plus long qu'il est préférable d'échantillonner sur un cycle entier les fractions du système chromatographique, ces échantillons étant ensuite analysés. Ainsi on ne peut obtenir les résultats de pureté qu'avec au moins un cycle de retard et avec une périodicité supérieure à un ou deux cycles, ce qui rend plus difficile la régulation et la détermination du réglage à appliquer. Il y a donc un délai de réactivité des systèmes à accumulation suite à des modifications de paramètres opératoires ou suite à des perturbations à quoi peut s'ajouter un délai d'analyse.

Le présent procédé permet de réagir dès l'observation d'une modification de l'historique. La régulation mise en oeuvre pour rétablir le système est alors rapide. De plus, le procédé permet également, par le contrôle d'un point caractéristique entre le début d'une étape de collecte de l'extrait et la fin de l'étape suivante de collecte du raffinat, de contrôler le volume de phase mobile utilisé par le procédé chromatographique, contrairement aux procédés régulés par le contrôle de deux points caractéristiques situés sur le front d'adsorption et le front de désorption.

La **figure 3** montre un historique obtenu lors de l'utilisation d'un procédé selon l'invention dans lequel une contrainte de volume maximal d'éluant injecté par cycle a été fixée. La position du point caractéristique de basse concentration coïncide avec sa position cible. Dans cet exemple, la position du point caractéristique de basse concentration correspond à la position de l'injection d'éluant. On remarque que les points caractéristiques d'adsorption et de désorption (tels que décrits dans le document WO 2007/101944) n'ont pas atteint leur position cible et que des écarts persistent entre les points d'adsorption et de désorption et leur position cible respective.

La **figure 4** montre un historique obtenu lors de l'utilisation d'un procédé selon l'invention dans lequel une contrainte de volume minimal d'éluant injecté par cycle a été fixée. La position du point caractéristique de basse concentration coïncide avec sa position cible. Dans cet exemple également, la position du point caractéristique de basse concentration correspond à la position de l'injection d'éluant. On remarque que dans ce cas aussi les points caractéristiques d'adsorption et de désorption n'ont pas atteint leur position cible et que des écarts persistent entre les points d'adsorption et de désorption et leur position cible respective.

Cette régulation sur la base du point caractéristique de basse concentration et non pas des points caractéristiques d'adsorption et de désorption permet le respect des extrema de volume d'éluant imposés.

Selon certains modes de réalisation, le procédé comprend en outre une étape de mesure de la pureté d'au moins une fraction collectée. En particulier, le procédé comprend une étape de mesure de la pureté de l'extrait et/ou du raffinat.

La pureté de la ou des fractions est ensuite comparée avec respectivement une pureté cible, c'est-à-dire à une pureté prédéterminée que l'on souhaite atteindre.

On peut également, de manière alternative à la mesure de la ou des puretés ou bien en complément de ces mesures, mesurer une quantité d'une espèce cible dans une fraction collectée et déterminer son rendement lié à la présence d'espèce cible dans la ou les autres fractions collectées. Ainsi, le procédé peut comprendre une étape de mesure du rendement en une espèce cible de l'extrait et/ou du raffinat et une étape de comparaison du ou des rendements mesurés avec respectivement un rendement cible. Dans le procédé décrit ici, il est possible d'utiliser indifféremment des contraintes de pureté et/ou de rendement, il s'agit en effet d'un même type de contraintes, mais posé différemment.

Par « *rendement d'une fraction collectée* », on entend au sens de la présente invention le rendement en une espèce cible contenue dans ladite fraction collectée.

Dans certains modes de réalisation, le procédé comprend également une étape de modification du volume de mélange à séparer injecté par cycle en fonction de la différence entre la ou les puretés mesurées et la ou les puretés cibles.

Par exemple, dans le cas d'un mélange binaire, si les deux puretés de l'extrait et du raffinat sont toutes les deux supérieures aux puretés prédéterminées, cela signifie que les puretés sont au-delà des spécifications ; la quantité de mélange peut être augmentée pour « *dégrader* » les puretés jusqu'aux spécifications. Si les puretés d'extrait et de raffinat sont toutes les deux inférieures aux puretés prédéterminées, cela signifie que les puretés sont en-deçà des spécifications ; la quantité de mélange peut être diminuée pour améliorer la séparation et augmenter les puretés jusqu'aux spécifications. On peut ajuster ce mode de fonctionnement lorsqu'une seule pureté présente un intérêt. Comme indiqué ci-dessus, on peut aussi mesurer une quantité de l'espèce cible et son rendement lié à la présence d'espèce cible perdue dans les autres collectes. Ce rendement est directement lié à la pureté des autres fractions.

De préférence, les étapes de mesure de la pureté (et/ou du rendement) d'au moins une fraction collectée, de comparaison de la ou des puretés mesurées (et/ou du ou des rendements mesurés) avec une pureté cible (et/ou un rendement cible), et de modification du volume de mélange à séparer injecté par cycle sont effectuées au moins en partie en parallèle des étapes de détection sur l'historique du point caractéristique de basse concentration, de comparaison de sa position à une position cible et d'ajustement du volume porteur du point caractéristique.

La modification de la quantité de mélange à séparer peut être mise en oeuvre en modifiant le volume de mélange injecté au cours d'une période. La modification du volume de mélange à séparer peut être effectuée de plusieurs façons:

- en augmentant ou réduisant le débit d'injection de mélange ; et/ou
- en augmentant ou réduisant la durée de période.

Le contrôle de la quantité de mélange à séparer (ou charge) à injecter nécessite de mesurer au moins une donnée de pureté et/ou de rendement. L'exemple qui suit, non limitatif, illustre une méthode pour définir la quantité de charge à injecter utilisable si deux puretés sont ciblées à l'extrait et au raffinat. Soient les variables suivantes :

- $P^*_{ext}$ : Pureté cible à l'extrait ;
- $P^*_{raff}$ : Pureté cible au raffinat ;
- $P_{ext}$ : Pureté mesurée à l'extrait ;
- $P_{raff}$ : Pureté mesurée au raffinat ;
- $\varepsilon_{ext} = P_{ext} - P^*_{ext}$, c'est-à-dire l'écart entre la pureté mesurée et la pureté cible de l'extrait
- $\varepsilon_{raff} = P_{raff} - P^*_{raff}$, c'est-à-dire l'écart entre la pureté mesurée et la pureté cible du raffinat.

Les puretés peuvent être calculées grâce à la détermination des concentrations massiques ou molaires d'une ou plusieurs espèces d'intérêt dans la fraction concernée.

Selon une première méthode, des régulations PID peuvent être effectuées sur une grandeur obtenue à partir des écarts d'une seule ou des puretés à leur valeur cible ($\varepsilon_{ext}$ et/ou $\varepsilon_{raff}$). Une autre possibilité est d'utiliser la valeur d'une fonction dépendante des puretés obtenues et des puretés cibles pour calculer la nouvelle quantité à injecter.

La modification de la quantité de mélange à séparer injectée provoque une perturbation pouvant entraîner le déplacement du point caractéristique de basse concentration par rapport à la position cible. La position du point caractéristique de basse concentration est alors modifiée par l'ajustement du volume porteur du point caractéristique tel que cela a déjà été décrit ci-dessus.

La régulation de la position du point caractéristique de basse concentration s'effectue par le contrôle d'un seul volume porteur choisi parmi le volume de zone 1, le volume de zone 4 ou une combinaison des deux (par exemple la moyenne des points caractéristiques de chaque zone). La répartition du volume porteur entre la zone 1 et la zone 4 reste contrôlée précisément, ce qui permet de respecter des valeurs de seuil haut et/ou bas du volume de phase mobile. Si les seuils haut et bas sont égaux, le volume de phase mobile injecté par cycle est régulé à une valeur de consigne précise. Cette valeur de consigne est naturellement comprise entre les bornes maximale et minimale de volume de phase mobile. Le procédé de contrôle permet donc d'imposer des non franchissements de seuils haut et/ou bas et également de contrôler précisément le volume de phase mobile selon d'autres critères que le respect des positions de fronts en zones 1 et 4.

Dans une description plus générale du procédé, il est possible de contrôler le volume de phase mobile entre des bornes maximales et minimales qui sont les extremums à ne jamais dépasser en utilisant des variables intermédiaires de contrôles qui sont des seuils haut et bas. Deux façons extrêmes d'utilisations sont possibles :

- les seuils haut et bas sont fixés comme étant proches des bornes maximales et minimales et le volume de phase mobile est contrôlé selon le procédé décrit ici lorsque sa valeur sort de la plage autorisée ;
- les seuils haut et bas sont modifiés en fonction des mesures de pureté et/ou de rendement, les valeurs des seuils restant eux-mêmes constamment entre les bornes maximales et minimales de volume de phase mobile.

Ainsi, dans certains modes de réalisation, le procédé comprend une étape de modification de la consigne du volume de phase mobile injecté par cycle en fonction de la différence entre la ou les puretés mesurées et la ou les puretés cibles (et/ou de la différence entre le ou les rendements mesurés et le ou les rendements cibles).

Par exemple, dans le cas d'un mélange binaire, si les deux puretés de l'extrait et du raffinat sont toutes les deux supérieures aux puretés prédéterminées, cela signifie que les puretés sont au-delà des spécifications ; le volume de phase mobile peut être diminué. Si les puretés d'extrait et de raffinat sont toutes les deux inférieures aux puretés prédéterminées, cela signifie que les puretés sont en-deçà des spécifications ; le volume de phase mobile peut être augmenté. On peut ajuster ce mode de fonctionnement lorsqu'une seule pureté présente un intérêt. On peut aussi mesurer une quantité du produit cible et son rendement lié à la présence de produit cible perdu dans les autres collectes. Ce rendement est directement lié à la pureté des autres fractions.

De préférence, les étapes de mesure de la pureté (et/ou du rendement) d'au moins une fraction collectée, de comparaison de la ou des puretés mesurées (et/ou du ou des rendements mesurés) avec une pureté cible (et/ou avec un rendement cible), et de modification du volume de phase mobile injecté par cycle sont effectuées au moins en partie en parallèle des étapes de détection sur l'historique du point caractéristique de base concentration, de comparaison de sa position à une position cible et d'ajustement du volume porteur du point caractéristique.

Dans certains modes de réalisation, lors de l'étape de modification du volume de phase mobile injecté par cycle, le volume de mélange à séparer injecté par cycle reste constant.

Selon d'autres modes de réalisation, le volume de mélange injecté par cycle et le volume de phase mobile injecté par cycle sont modifiés conjointement en fonction de la différence entre les puretés mesurées et les puretés cibles (et/ou de la différence entre le ou les rendements mesurés et le ou les rendements cibles).

L'éventuelle variation du volume de phase mobile injecté s'effectue en tenant compte de la borne maximale et / ou de la borne minimale pour ce volume qui est ou sont prévues dans le procédé décrit ici.

Dans certains modes de réalisation, le procédé comprend une étape de définition de la position cible du point caractéristique de basse concentration en fonction de la différence entre la ou les puretés mesurées et la ou les puretés cibles (et/ou de la différence entre le ou les rendements mesurés et le ou les rendements cibles). Cette étape permet d'améliorer le procédé déjà décrit, de manière à optimiser la position cible par rapport aux puretés souhaitées. Les puretés mesurées peuvent être la pureté de l'extrait et/ou du raffinat.

De préférence, les étapes de mesure de la pureté (et/ou du rendement) d'au moins une fraction collectée, de comparaison de la ou des puretés mesurées (et/ou du ou des rendements mesurés) avec une pureté cible (et/ou avec un rendement cible), et de définition de la position cible sont effectuées au moins en partie en parallèle des étapes de détection sur l'historique du point caractéristique de basse concentration, de comparaison de sa position à une position cible et d'ajustement du volume porteur du point caractéristique.

La position cible du point caractéristique de basse concentration peut être telle qu'elle est suffisamment éloignée (dans le temps) des collectes de raffinat et d'extrait, si la pureté des deux fractions (en cas de mélange binaire) est d'importance. Par exemple, le point caractéristique de basse concentration peut être positionné dans l'étape d'injection de l'éluant. Toutefois, il se peut que la pureté d'une seule fraction soit d'importance. Dans ce cas la position cible peut être rapprochée de l'une ou l'autre des collectes de raffinat ou d'extrait. Par exemple, le point caractéristique de basse concentration peut être positionné dans la zone 1 ou dans la zone 4.

Comme indiqué ci-dessus, on peut aussi mesurer une quantité du produit cible et son rendement lié à la présence de produit cible perdu dans les autres collectes. Ce rendement est directement lié à la pureté des autres fractions.

Il est à noter que la mesure de la pureté des fractions peut être obtenue avec un certain délai. Toutefois, ceci n'est pas pénalisant pour le procédé car les étapes de mesure de la pureté d'au moins une fraction collectée, de comparaison de la ou des puretés mesurées avec une pureté cible, et de définition de la position cible sont avantageusement réalisées en parallèle des étapes de détection sur l'historique du point caractéristique de base concentration, de comparaison de sa position à une position cible et d'ajustement du volume porteur du point caractéristique. La définition de la nouvelle position cible peut alors être mise en oeuvre à chaque nouvelle mesure disponible ou même tous les cycles en considérant simplement les dernières mesures disponibles.

Pendant le délai d'analyse de la ou des puretés, le procédé poursuit l'ajustement du volume porteur du point caractéristique de basse concentration par comparaison de la position du point caractéristique avec la position cible en cours de validité.

Afin de définir la position cible du point caractéristique, plusieurs méthodes sont possibles.

Selon une première méthode, on applique une régulation de type PID sur les paramètres $\varepsilon_{ext}$ ou $\varepsilon_{raff}$. Ainsi si

$\varepsilon_{ext}$ est négatif, alors la position cible sera éloignée de la ligne d'extrait (la position cible se rapproche de la ligne de raffinat). De même, si $\varepsilon_{ext}$ est positif, alors la position cible sera rapprochée de la ligne d'extrait (la position cible s'éloigne de la ligne de raffinat). La régulation est similaire si appliquée à $\varepsilon_{raff}$. Si $\varepsilon_{raff}$ est négatif, alors la position cible sera éloignée de la ligne de raffinat (la position cible se rapproche de la ligne d'extrait). De même, si $\varepsilon_{raff}$ est positif, alors la position cible sera rapprochée de la ligne de raffinat (la position cible s'éloigne de la ligne d'extrait).

Selon une deuxième méthode, un régulateur PID est appliqué sur la combinaison des écarts $\varepsilon_{ext}$ et $\varepsilon_{raff}$ et plus généralement sur la combinaison des écarts entre les puretés et/ou rendements mesurés et les puretés et/ou rendements cibles.

Selon une troisième méthode, une fonction dépendante des puretés obtenues et des puretés cibles est directement utilisée pour calculer la nouvelle position du point caractéristique.

Au cours de l'étape de définition de la position cible, la position cible peut aussi être définie par rapport à la position de l'injection de phase mobile sur l'historique. Cela permet de s'adapter à des changements de position du point d'injection.

L'optimisation de la position cible du point caractéristique de basse concentration peut être réalisée de manière automatique.

Dans certains modes de réalisation avantageux, le procédé comprend en outre :

- la détermination, en un noeud du système, de l'historique d'une variable représentative de la concentration d'une ou plusieurs espèces contenues dans le mélange à séparer ;
- la détection sur l'historique d'un autre point caractéristique, appelé point caractéristique de haute concentration dans la présente description, situé entre le début d'une étape de collecte du raffinat et la fin de l'étape suivante du collecte de l'extrait ;
- la comparaison de la position du point caractéristique de haute concentration par rapport à une position cible ;
- l'ajustement du volume porteur du point caractéristique de haute concentration modifiant sa position pour la rapprocher de sa position cible.

La variable représentative de la concentration, le noeud d'observation et l'historique peuvent chacun et indépendamment être les mêmes variable, noeud d'observation et historique que ceux utilisés pour la détection du point caractéristique de basse concentration ; ou peuvent être une variable, un noeud d'observation et un historique différents.

Ce point caractéristique de haute concentration se situe entre les lignes de raffinat et d'extrait, autrement dit dans la zone 2 ou dans la zone 3, ou à l'interface des zones 2 et 3 (c'est-à-dire à la position moyenne d'injection du mélange à séparer), là où les concentrations sont élevées.

Le document WO 2007/101944 décrit de manière détaillée la détection et l'utilisation de ce point caractéristique de haute concentration, qui est représenté notamment dans les figures 6 à 11 et 18 à 21 du document WO 2007/101944.

Ce qui a été énoncé ci-dessus au sujet du point caractéristique de basse concentration s'applique par analogie au point caractéristique de haute concentration.

Le volume porteur qui est ajusté pour contrôler la position du point caractéristique de haute concentration est par exemple le volume de zone 2 et toute variation du volume de zone 2 est répercutée à l'identique sur le volume de zone 3.

Contrainte de volume de phase mobile

Dans le procédé selon le premier aspect, le volume de la phase mobile injecté par cycle est maintenu supérieur ou égal à une borne minimale et/ou inférieur ou égal à une borne maximale, au moins pendant une partie du procédé ; et de préférence pendant la totalité du procédé.

Dans le cas où une borne maximale est imposée, lorsque le volume de phase mobile injecté par cycle atteint cette borne maximale, il ne peut plus augmenter. Avantageusement, lorsque le volume de phase mobile atteint la borne maximale, il reste constant à cette borne maximale.

Dans le cas où une borne minimale est imposée, lorsque le volume de phase mobile injecté par cycle atteint cette borne minimale, il ne peut plus diminuer. Avantageusement, lorsque le volume de phase mobile atteint la borne minimale, il reste constant à cette borne minimale.

Dans certains modes de réalisation, le volume de phase mobile est maintenu à la fois supérieur ou égal à une borne minimale et inférieur ou égal à une borne maximale. Dans certains modes de réalisation, la borne maximale et la borne minimale sont identiques. Dans ce cas, le volume de phase mobile injectée est régulé à un volume constant égal à la borne minimale (ou maximale).

Déclenchement de la régulation selon l'invention en cours de procédé

La régulation du procédé par référence au point caractéristique de basse concentration peut dans certains cas être mise en oeuvre au cours du procédé, lorsqu'une condition est atteinte, et pas nécessairement dès le début du procédé.

Par exemple, cette régulation peut être déclenchée lorsque le volume de phase mobile injecté atteint ou dépasse un certain seuil.

Ainsi, un autre objet décrit dans la présente divulgation est un procédé de séparation d'un mélange dans un système comprenant un ensemble d'une ou plusieurs colonnes de chromatographie, le procédé comprenant successivement, de manière cyclique :

- une étape de collecte d'un raffinat, une étape d'injection du mélange à séparer, une étape de collecte d'un extrait et une étape d'injection de phase mobile ;

le volume de la phase mobile injectée par cycle étant maintenu supérieur ou égal à une borne minimale et/ou inférieur ou égal à une borne maximale ;
le procédé étant tel que :

- tant que le volume de la phase mobile injectée par cycle est supérieur ou égal à une valeur seuil ou inférieure ou égal à une valeur seuil, le procédé comprend :

  ▪ la détermination, en un noeud du système, de l'historique d'une variable représentative de la concentration d'une ou plusieurs espèces contenues dans le mélange à séparer ;
  ▪ la détection sur l'historique d'un premier point caractéristique entre le début de l'étape de collecte d'extrait et la fin de l'étape suivante d'injection de phase mobile (dit également point caractéristique de désorption) ;
  ▪ la détection sur l'historique d'un deuxième point caractéristique entre le début de l'étape d'injection de phase mobile et la fin de l'étape suivante de collecte de raffinat (dit également point caractéristique de d'adsorption) ;
  ▪ la comparaison de la position de chacun des points caractéristiques à une position cible respective ;
  ▪ l'ajustement du volume porteur du premier point caractéristique et du volume porteur du deuxième point caractéristique, modifiant la position du premier point caractéristique et du deuxième point caractéristique, pour les rapprocher de leurs positions cibles respectives ;

- lorsque le volume de la phase mobile injectée par cycle atteint une valeur seuil, le procédé est un procédé tel que décrit ci-dessus : c'est-à-dire que la régulation basée sur le premier point caractéristique et sur le deuxième point caractéristique est abandonnée, au profit de la régulation basée sur le point caractéristique de basse concentration décrite ci-dessus.

Par exemple, la valeur seuil peut être la borne minimale et/ou la borne maximale de la phase mobile injectée. Alternativement, il peut s'agir d'une valeur seuil ayant un écart prédéterminé par rapport à la borne minimale et/ou à la borne maximale.

Ainsi, tant que le volume de phase mobile injecté par cycle n'a pas atteint la valeur seuil, le procédé chromatographique est régulé par la comparaison de la position de deux points caractéristiques d'adsorption et de désorption à une position cible respective. Cela permet une précision optimale de la régulation. Lorsque le volume de phase mobile, modifié du fait de la régulation ou pour toute autre raison, atteint la valeur seuil (et par exemple borne minimale ou la borne maximale), le procédé est alors régulé de manière moins précise à l'aide du point caractéristique de basse concentration, tel que cela est décrit ci-dessus, ce qui permet d'éviter les inconvénients liés à une trop forte augmentation ou une trop forte diminution de la phase mobile injectée.

La régulation au moyen des deux points caractéristiques d'adsorption et de désorption a été décrite en détail dans le document WO 2007/101944 comme mentionné ci-dessus.

De plus, ce qui a été énoncé ci-dessus au sujet du point caractéristique de basse concentration s'applique par analogie à chacun des points caractéristiques d'adsorption et de désorption.

Programme d'ordinateur

Un autre objet décrit dans la présente divulgation, ne représentant pas l'invention, consiste en un programme d'ordinateur comprenant des instructions de code de programme pour l'exécution des étapes du procédé décrit ci-dessus lorsque ledit programme est exécuté sur un ordinateur.

Est également décrit dans la présente divulgation (sans représenter l'invention) un support de stockage lisible par ordinateur sur lequel est enregistré un programme d'ordinateur tel que défini ci-dessus.

Est également décrit dans la présente divulgation (sans représenter l'invention) un système comprenant un processeur couplé à une mémoire sur laquelle est enregistré un programme d'ordinateur tel que défini ci-dessus. Ledit système peut également comprendre le système de séparation chromatographique tel que décrit ci-dessus ou être uniquement un système de commande, connecté au système de séparation et distinct de celui-ci.

Mesure des puretés et/ou rendements par des détecteurs en ligne

La présente divulgation décrit aussi, selon un deuxième aspect ne représentant pas l'invention, un procédé de séparation d'un mélange dans un système comprenant une pluralité de colonnes de chromatographie, le procédé comprenant successivement, de manière cyclique, dans une partie donnée du système :

- une étape de collecte d'un raffinat, une étape d'injection du mélange à séparer, une étape de collecte d'un extrait et une étape d'injection de phase mobile ;

le procédé comprenant par ailleurs la mesure de la pureté et/ou du rendement d'au moins une fraction collectée choisie parmi l'extrait et le raffinat, ladite mesure de pureté et/ou de rendement comprenant les étapes suivantes:

- la détermination, en un noeud du système, d'historiques d'au moins deux variables respectives représentatives de la concentration d'au moins deux espèces contenues dans le mélange à séparer, au moyen d'au moins un détecteur rapide en ligne ;
- la détermination de la concentration d'au moins deux espèces du mélange à séparer dans la fraction collectée à partir des historiques ;
- la détermination de la pureté et/ou du rendement de la fraction collectée à partir des concentrations.

Par « *détermination d'historiques d'au moins deux variables respectives représentatives de la concentration d'au moins deux espèces contenues dans le mélange à séparer* », on entend la détermination d'historiques d'au moins deux variables, ces variables étant chacune représentative de la concentration d'au moins deux espèces (c'est-à-dire de l'ensemble d'au moins deux espèces) contenues dans le mélange à séparer.

La pureté correspond au rapport de la concentration d'une ou plusieurs espèces dans la fraction collectée, par rapport à la somme de l'ensemble des concentrations déterminées dans la fraction collectée.

Le rendement correspond au rapport de quantité d'une espèce dans une des deux fractions collectées par rapport à la quantité totale de cette espèce des deux fractions collectées cumulées.

Par « *détecteur en ligne* », on entend au sens de la présente divulgation un détecteur positionné en sortie d'une colonne chromatographique, c'est-à-dire sur une ligne de connexion entre deux colonnes successives. Par « *détecteur en ligne* », on entend également un détecteur en dérivation dont le prélèvement est positionné en sortie d'une colonne chromatographique, c'est-à-dire sur une ligne de connexion entre deux colonnes successives. Ainsi, un détecteur en ligne n'est pas situé sur une ligne de sortie du système chromatographique (c'est-à-dire sur une ligne de collecte de l'extrait ou du raffinat).

Selon le procédé selon le deuxième aspect, un seul ou, alternativement, plusieurs détecteurs peuvent être utilisés. Dans le cas où au moins deux détecteurs sont utilisés, ils peuvent être positionnés en sortie d'une même colonne, ou à la sortie de colonnes différentes.

Dans un système dans lequel est mis en oeuvre un procédé chromatographique cyclique, deux types de détecteurs peuvent être utilisés : les détecteurs rapides et les détecteurs lents. Dans ce procédé selon le deuxième aspect, l'au moins un détecteur en ligne utilisé est un détecteur rapide.

On entend par « *détecteur rapide* » au sens de la présente divulgation un détecteur dont le temps de réponse est inférieur au vingtième de la durée d'un cycle. On entend par « *détecteur lent* » un détecteur dont le temps de réponse est supérieur au vingtième de la durée d'un cycle.

Un détecteur rapide émet un signal dépendant du profil de concentration des composés se déplaçant à l'intérieur du détecteur. Il peut donc permettre de détecter un point caractéristique sur un historique, par exemple pour la mise en oeuvre du procédé de séparation selon le premier aspect décrit ci-dessus.

Comme détecteur rapide, on peut citer les détecteurs d'absorbance UV/visible, mesurant à une seule ou plusieurs longueurs d'onde, les colorimètres, les densimètres, les conductimètres, les refractomètres, les brixmètres, les polarimètres, les appareils de résonance magnétique nucléaire et les spectromètres NIR (proche infrarouge), IR (infrarouge), FTIR (infrarouge à transformée de Fourier) et Raman. Un détecteur de température peut être utilisé pour corriger le signal donné par les détecteurs mentionnés ci-dessus.

Dans certains modes de réalisation, l'au moins un détecteur rapide en ligne est choisi parmi les détecteurs rapides mentionnés ci-dessus, sous réserve que les au moins deux variables représentatives de la concentration d'au moins deux espèces contenues dans le mélange à séparer détectées soient différentes.

L'au moins un détecteur peut mesurer une ou plusieurs variables représentatives de la concentration d'au moins deux espèces contenues dans le mélange à séparer. Ainsi, par exemple, les détecteurs de type spectrométrique, après calibration des longueurs d'onde d'absorption ou d'émission aux espèces à séparer, pourront permettre avec un seul appareil de mesurer la concentration desdites espèces.

L'utilisation d'un seul détecteur rapide ne permet parfois pas d'atteindre la mesure précise d'une concentration d'une espèce.

Comme illustré dans l'exemple 6, l'utilisation d'une combinaison d'un polarimètre et d'un densimètre lors de la purification d'un mélange comprenant du glucose, du fructose et des polymères de glucose en quantité minoritaire permet d'obtenir des variables représentatives des concentrations des espèces du mélange: le densimètre donne une information sur la somme de toutes les concentrations et le polarimètre mesure une rotation de la lumière polarisée, sachant que le glucose et les polymères de glucose ont une contribution positive tandis que le fructose présente une contribution négative. Dans ce cas, les variables représentatives sont la densité et la polarité. La combinaison des valeurs de ces variables obtenues par les deux détecteurs permet d'évaluer les concentrations d'espèces du mélange (après une calibration des détecteurs).

Dans le cas de l'utilisation d'un spectromètre (IR, NIR, FTIR, Raman...), chaque mesure du spectromètre renvoie un vecteur d'informations constitué d'un ensemble de valeurs d'absorption ou d'émission à différentes longueurs d'onde. L'adsorption ou l'émission à ces différentes longueurs d'onde est chacune potentiellement une variable représentative d'une concentration des espèces. En effet, une combinaison de ces valeurs d'adsorption ou d'émission entre elles permet d'estimer la valeur des concentrations d'une ou plusieurs des espèces. La détermination d'une telle combinaison se fait par des outils de chimiométrie standards.

Dans des modes de réalisation, au moins deux détecteurs rapides en ligne sont utilisés pour déterminer les historiques. De préférence, ils sont choisis parmi les détecteurs rapides mentionnés ci-dessus.

Dans certains modes de réalisation, les au moins deux détecteurs en ligne sont un polarimètre et un densimètre.

Selon d'autres modes de réalisation, les au moins deux détecteurs en ligne sont un densimètre et un conductimètre.

Dans certains modes de réalisation, les au moins deux espèces du mélange à séparer sont des monosaccharides. Dans ces modes de réalisation, l'extrait et le raffinat sont enrichis en des monosaccharides différents. En particulier, les monosaccharides sont choisis parmi les monosaccharides mentionnés ci-dessus.

Dans certains modes de réalisation, les au moins deux espèces du mélange à séparer sont le glucose et le fructose. Dans ces modes de réalisation, le mélange à séparer peut contenir uniquement du glucose et du fructose, éventuellement dilués dans un solvant, par exemple de l'eau. Alternativement, le mélange à séparer peut contenir un ou plusieurs autres composés, tels que des polymères de glucose.

Avantageusement, lorsque les au moins deux espèces du mélange à séparer sont le glucose et le fructose, au moins deux détecteurs rapides en ligne sont utilisés, de préférence un polarimètre et un densimètre.

Selon d'autres modes de réalisation, les aux moins deux espèces du mélange à séparer sont une espèce ionisée, par exemple sous forme de sel, et une espèce non ionisée. Dans ces modes de réalisation, l'extrait et le raffinat sont enrichis en des espèces différentes, c'est-à-dire que l'extrait est enrichi en espèce ionisée et le raffinat est enrichi en espèce non ionisée ou inversement (l'extrait est enrichi en espèce non ionisée et le raffinat est enrichi en espèce ionisée).

Comme espèce ionisée, on peut citer les acides aminés, les sels, ou les acides organiques se trouvant sous forme ionisée au pH et à la température de fonctionnement de la séparation chromatographique.

Comme espèce non ionisée au pH et à la température de fonctionnement de la séparation chromatographique, on peut citer les alcools et les sucres, tels que les monosaccharides et les polysaccharides mentionnés ci-dessus.

Avantageusement, lorsque les au moins deux espèces du mélange à séparer sont une espèce ionisée et une espèce non ionisée, au moins deux détecteurs rapides en lignes sont utilisés, de préférence un densimètre et un conductimètre.

Dans certains modes de réalisation, le procédé comprend, après l'étape de détermination d'historiques d'au moins deux variables respectives représentatives de la concentration d'au moins deux espèces contenues dans le mélange à séparer, une étape de détermination de la valeur moyenne de chaque variable sur un intervalle de mesure des historiques.

Selon d'autres modes de réalisation, le procédé comprend, après l'étape de détermination d'historiques d'au moins deux variables respectives représentatives de la concentration d'au moins deux espèces contenues dans le mélange à séparer, une étape de détermination de la valeur de l'intégration de chaque variable sur un intervalle de mesure des historiques.

Dans ce qui précède, chaque intervalle de mesure d'historique peut être défini en totalité par la collecte de la fraction en question. En d'autres termes, ledit un intervalle de mesure d'historique correspond, lors d'un cycle, aux temps (ou volumes) auxquels la ligne de collecte de la fraction considérée se trouve entre les mêmes colonnes successives que le détecteur en question.

Ledit intervalle de mesure peut également correspondre à une partie seulement de la collecte de la fraction en question.

Ledit intervalle de mesure peut également correspondre à une partie ou la totalité de la collecte de la fraction en question, et à une portion de l'historique suivant immédiatement la collecte de la fraction en question.

Ledit intervalle de mesure peut également correspondre à une partie ou la totalité de la collecte de la fraction en question, et à une portion de l'historique précédant immédiatement la collecte de la fraction en question.

Ces trois derniers modes de réalisation sont particulièrement utiles si une asymétrie est présente dans le système de chromatographie.

Cette mesure des puretés et/ou rendements est utilisable avec tous les procédés de contrôles de l'état de l'art nécessitant une mesure de pureté pour effectuer des actions.

Dans certains modes de réalisation, le procédé comprend en outre :

- la détermination, en un noeud du système, de l'historique d'une variable représentative de la concentration d'une ou plusieurs espèces contenues dans le mélange à séparer ;
- la détection sur l'historique d'un point caractéristique de haute concentration situé entre le début d'une étape de collecte du raffinat et la fin de l'étape suivante de collecte de l'extrait ;
- la comparaison de la position du point caractéristique de haute concentration par rapport à une position cible ;
- l'ajustement du volume porteur du point caractéristique de haute concentration modifiant la position du point caractéristique de haute concentration pour la rapprocher de sa position cible.

Ce qui a été énoncé ci-dessus au sujet du point caractéristique de haute concentration peut ainsi s'appliquer au deuxième aspect décrit ici.

Dans certains modes de réalisation, le procédé comprend en outre :

- la détection sur l'historique d'un premier point caractéristique entre le début de l'étape de collecte d'extrait et la fin de l'étape suivante d'injection de phase mobile (dit également point caractéristique de désorption) ;
- la détection sur l'historique d'un deuxième point caractéristique entre le début de l'étape d'injection de phase mobile et la fin de l'étape suivante de collecte de raffinat (dit également point caractéristique d'adsorption) ;
- la comparaison de la position de chacun des points caractéristiques à une position cible respective ;
- l'ajustement du volume porteur du premier point caractéristique et du volume porteur du deuxième point caractéristique, modifiant la position du premier point caractéristique et du deuxième point caractéristique, pour les rapprocher de leurs positions cibles respectives.

Ce qui a été énoncé ci-dessus au sujet des points caractéristiques d'adsorption et de désorption peut ainsi s'appliquer au deuxième aspect décrit ici.

Dans certains modes de réalisation, le procédé comprend en outre :

- la détermination, en un noeud du système, de l'historique d'une variable représentative de la concentration d'une ou plusieurs espèces contenues dans le mélange à séparer ;
- la détection sur ledit historique d'un point caractéristique de basse concentration entre le début d'une étape de collecte de l'extrait et la fin de l'étape suivante de collecte du raffinat ;
- la comparaison de la position du point caractéristique de basse concentration par rapport à une position cible ;
- l'ajustement du volume porteur du point caractéristique de basse concentration, modifiant la position du point caractéristique de basse concentration pour rapprocher la position du point caractéristique de basse concentration de sa position cible ;
- de préférence, le volume de la phase mobile injecté par cycle étant maintenu supérieur ou égal à une borne minimale et/ou inférieur ou égal à une borne maximale.

Ce qui a été énoncé ci-dessus au sujet du point caractéristique de basse concentration peut ainsi s'appliquer au deuxième aspect décrit ici.

Dans les modes de réalisation ci-dessus, les historiques sur lesquels sont détectés le point caractéristique de haute concentration, les points caractéristiques d'adsorption et de désorption, le point caractéristique de basse concentration, et les historiques à partir desquels la concentration d'au moins deux espèces du mélange à séparer dans au moins une fraction collectée est déterminée peuvent indépendamment être les mêmes historiques ou des historiques différents. Il en est de même pour les variables représentatives de la concentration d'espèces contenues dans le mélange à séparer.

Dans certains modes de réalisation, le procédé comprend également une étape de comparaison de la pureté mesurée et/ou du rendement mesuré avec une pureté cible et/ou un rendement cible. Si la pureté et/ou le rendement sont mesurés dans l'extrait et dans le raffinat, le procédé peut comprendre une étape de comparaison des deux puretés et/ou rendements mesurés avec leur pureté et/ou rendement cibles respectifs.

Dans certains modes de réalisation, le procédé comprend également une étape de modification du volume de mélange à séparer injecté par cycle en fonction de la différence entre la (ou les) pureté(s) mesurée(s) et la (ou les) pureté(s) cible(s) (et/ou de la différence entre le ou les rendements mesurés et le ou les rendements cibles).

Dans certains modes de réalisation, le procédé comprend une étape de modification du volume de phase mobile injecté par cycle en fonction de la différence entre la (ou les) pureté(s) mesurée(s) et la (ou les) pureté(s) cible(s) (et/ou de la différence entre le ou les rendements mesurés et le ou les rendements cibles).

Dans certains modes de réalisation, le volume de mélange injecté par cycle et le volume de phase mobile injecté par cycle sont modifiés conjointement en fonction de la différence entre la (ou les) pureté(s) mesurée(s) et la (ou les) pureté(s) cible(s) (et/ou de la différence entre le ou les rendements mesurés et le ou les rendements cibles).

Dans certains modes de réalisation, le procédé comprend une étape de définition de la position cible du ou des points caractéristiques en fonction de la différence entre la (ou les) pureté(s) mesurée(s) et la (ou les) pureté(s) cible(s) (et/ou de la différence entre le ou les rendements mesurés et le ou les rendements cibles). Il peut s'agir de la définition de la position cible du point caractéristique de haute concentration et/ou de la définition de la position cible du point caractéristique d'adsorption et/ou de celle du point caractéristique de désorption et/ou de celle du point caractéristique de basse concentration.

Ce qui a été énoncé ci-dessus à propos de la comparaison d'une pureté et/ou d'un rendement mesurés avec une pureté et/ou un rendement cibles, de la modification, en fonction de cette comparaison, du volume de mélange injecté et du volume de phase mobile et de la définition, en fonction de cette comparaison, de la position cible du point caractéristique peut ainsi s'appliquer au deuxième aspect décrit ici.

Dans certains modes de réalisation du procédé, des grandeurs telles que la vitesse opératoire moyenne du fluide dans les colonnes peuvent également être modulées si l'on souhaite modifier la production du système ou contrôler la pression sur une ou plusieurs colonnes du système.

Un autre objet décrit dans la présente divulgation (ne représentant pas l'invention) consiste en un programme d'ordinateur comprenant des instructions de code de programme pour l'exécution des étapes du procédé selon le deuxième aspect lorsque ledit programme est exécuté sur un ordinateur.

Est également décrit dans la présente divulgation (sans représenter l'invention) un support de stockage lisible par ordinateur sur lequel est enregistré un programme d'ordinateur tel que défini ci-dessus.

Est également décrit dans la présente divulgation (sans représenter l'invention) un système comprenant un processeur couplé à une mémoire sur laquelle est enregistré un programme d'ordinateur tel que défini ci-dessus. Ledit système peut également comprendre le système de séparation chromatographique tel que décrit ci-dessus ou être uniquement un système de commande, connecté au système de séparation et distinct de celui-ci.

Mesure des puretés et/ou rendements sur une cuve intermédiaire

La présente divulgation décrit également un procédé selon un troisième aspect correspondant à la présente invention. Selon ce troisième aspect, l'invention concerne un procédé de séparation d'un mélange dans une installation comprenant :

- un premier système comprenant une pluralité de colonnes de chromatographie, une ligne de sortie pour la collecte d'un raffinat et une ligne de sortie pour la collecte d'un extrait ;
- au moins un second système placé en aval du premier système ; et
- au moins une cuve alimentée par une desdites lignes de sortie du premier système, et alimentant le second système, de préférence avec un flux continu ;

le procédé comprenant successivement, de manière cyclique, dans une partie donnée du premier système :

- une étape de collecte d'un raffinat, une étape d'injection du mélange à séparer, une étape de collecte d'un extrait et une étape d'injection de phase mobile ;

le procédé comprenant par ailleurs la mesure de la pureté et/ou du rendement d'au moins une fraction collectée choisie parmi l'extrait et le raffinat, ladite mesure de pureté et/ou de rendement comprenant les étapes suivantes:

- la détermination de la concentration d'au moins deux espèces du mélange à séparer dans la fraction collectée dans la cuve ;

- la détermination de la pureté et/ou du rendement en au moins une espèce de la fraction collectée dans la cuve.

La détermination de la pureté et/ou du rendement en au moins une espèce de la fraction collectée dans la cuve est effectuée à partir des concentrations des au moins deux espèces du mélange à séparer déterminées dans la fraction collectée dans la cuve.

La pureté correspond au rapport de la concentration d'une ou plusieurs espèces dans la fraction collectée dans la cuve, par rapport à la somme de l'ensemble des concentrations déterminées dans la fraction collectée dans la cuve.

Le rendement correspond au rapport de quantité d'une espèce dans une des deux fractions collectées par rapport à la quantité totale de cette espèce des deux fractions collectées cumulées.

L'au moins un second système fonctionne préférentiellement avec une alimentation continue et à débit et composition stables. La cuve permet de garantir une alimentation continue du second système en cas d'arrêt court du premier système. La présence de la cuve peut par exemple permettre une heure de fonctionnement du second système en cas d'arrêt de l'installation de chromatographie. La cuve permet également d'uniformiser le débit et de lisser la composition de la fraction collectée avant son alimentation du second système en cas d'asymétrie dans le premier système d'une colonne à l'autre. De préférence, la cuve est périodiquement alimentée par une fraction collectée et constamment vidée vers le second système. Elle n'est jamais purgée ni même rincée totalement entre chaque cycle du système.

Dans le cas d'un système de chromatographie à l'équilibre, la fraction contenue dans la cuve possède une composition moyenne très proche de la composition moyenne de la fraction collectée sur un cycle.

Lorsque le système de chromatographie est modifié ou en évolution, la composition de la fraction contenue dans la cuve n'est pas rigoureusement égale à la composition de la fraction directement collectée sur un cycle du système, la composition de la fraction contenue dans la cuve évoluant avec un délai par rapport à la composition de la fraction directement collectée dû à la durée du renouvellement de la cuve. Le renouvellement du contenu de la cuve est d'autant plus retardé que le volume de la cuve est grand. Cette mesure reste toutefois suffisamment représentative, en particulier pour permettre une régulation du système de chromatographie.

Dans la présente description, les termes « *ligne de sortie* » et « *ligne de collecte* » ont le même sens.

Dans certains modes de réalisation, la détermination de la concentration d'au moins deux espèces du mélange à séparer dans la fraction collectée dans la cuve est effectuée au moyen d'au moins un détecteur, de préférence un détecteur lent.

Comme détecteurs lents, on peut citer les spectromètres proche infrarouge, les spectromètres infrarouge, les spectromètres infrarouge à transformée de Fourier et les spectromètres Raman, dans le cas où l'acquisition de plusieurs spectres est nécessaire pour obtenir un signal permettant une mesure précise, la durée d'acquisition totale pouvant alors être conséquente. On peut également citer comme détecteur lent toutes les techniques de résonance magnétique nucléaire.

Selon d'autres modes de réalisation, la détermination de la concentration d'au moins deux espèces du mélange à séparer dans la fraction collectée dans la cuve est effectuée au moyen d'un système de chromatographie analytique, tel que la chromatographie en phase liquide à haute performance (HPLC), la chromatographie en phase liquide à haute pression (UPLC), la chromatographie en phase liquide à ultra haute pression (UHPLC), la chromatographie en phase gazeuse (GC).

Le second système peut notamment être une unité de chromatographie, une unité de transformation enzymatique, une unité de transformation chimique, une unité de distillation, une unité de concentration membranaire, ou une unité d'évaporation. Dans certains modes de réalisation, le second système est une unité d'évaporation.

L'installation comprend une cuve (ou « *cuve intermédiaire* ») alimentée par une ligne de sortie. La cuve peut donc être alimentée par la ligne de sortie du raffinat, ou par la ligne de sortie de l'extrait ; des cuves respectives peuvent être alimentées par chaque ligne de sortie (c'est-à-dire la ligne de sortie du raffinat et celle de l'extrait). La cuve est alimentée par la fraction collectée dans la ligne de sortie sur laquelle elle est présente. La cuve est reliée, directement ou indirectement à un second système qui est alimenté par la fraction contenue dans la cuve.

De préférence, la cuve a un volume inférieur au volume de la fraction collectée (c'est-à-dire la fraction collectée qui l'alimente) sur un cycle. Dans certains modes de réalisation, la cuve contient un volume de fraction égal au volume de la fraction collectée sur une durée d'une à cinq périodes, de préférence sur trois périodes.

De manière particulièrement avantageuse, lorsque plusieurs mesures de pureté et/ou rendement sont réalisées successivement, la cuve n'est pas nettoyée et/ou purgée et/ou rincée entre ces mesures.

Le mélange à séparer peut contenir les espèces déjà énoncées ci-dessus.

Dans certains modes de réalisation, les au moins deux espèces du mélange à séparer dont la concentration est déterminée sont des monosaccharides. Dans ces modes de réalisation, l'extrait et le raffinat sont enrichis en des monosaccharides différents. En particulier, les monosaccharides sont choisis parmi les monosaccharides mentionnés ci-dessus dans la description du premier aspect.

Dans certains modes de réalisation, les au moins deux espèces du mélange à séparer sont le glucose et le fructose.

Dans certains modes de réalisation, le procédé selon l'invention comprend en outre :

- la détermination, en un noeud du système, de l'historique d'une variable représentative de la concentration d'une ou plusieurs espèces contenues dans le mélange à séparer ;
- la détection sur l'historique d'un point caractéristique de haute concentration situé entre le début d'une étape de collecte du raffinat et la fin de l'étape suivante de collecte de l'extrait ;
- la comparaison de la position du point caractéristique de haute concentration par rapport à une position cible ;
- l'ajustement du volume porteur du point caractéristique de haute concentration modifiant la position du point caractéristique de haute concentration pour la rapprocher de sa position cible.

Ce qui a été énoncé ci-dessus au sujet du point caractéristique de haute concentration peut s'appliquer au troisième aspect décrit ici.

Dans certains modes de réalisation, le procédé selon l'invention comprend en outre :

- la détection sur l'historique d'un premier point caractéristique entre le début de l'étape de collecte d'extrait et la fin de l'étape suivante d'injection de phase mobile (dit également point caractéristique de désorption) ;
- la détection sur l'historique d'un deuxième point caractéristique entre le début de l'étape d'injection de phase mobile et la fin de l'étape suivante de collecte de raffinat (dit également point caractéristique d'adsorption) ;
- la comparaison de la position de chacun des points caractéristiques à une position cible respective ;
- l'ajustement du volume porteur du premier point caractéristique et du volume porteur du deuxième point caractéristique, modifiant la position du premier point caractéristique et du deuxième point caractéristique, pour les rapprocher de leurs positions cibles respectives.

Ce qui a été énoncé ci-dessus au sujet des points caractéristiques d'adsorption et de désorption peut s'appliquer au troisième aspect décrit ici.

Dans certains modes de réalisation, le procédé selon l'invention comprend en outre :

- la détermination, en un noeud du système, de l'historique d'une variable représentative de la concentration d'une ou plusieurs espèces contenues dans le mélange à séparer ;
- la détection sur ledit historique d'un point caractéristique de basse concentration entre le début d'une étape de collecte de l'extrait et la fin de l'étape suivante de collecte du raffinat ;
- la comparaison de la position du point caractéristique de basse concentration par rapport à une position cible ;
- l'ajustement du volume porteur du point caractéristique de basse concentration, modifiant la position du point caractéristique de basse concentration pour rapprocher la position du point caractéristique de basse concentration de sa position cible ;
- de préférence, le volume de la phase mobile injecté par cycle étant maintenu supérieur ou égal à une borne minimale et/ou inférieur ou égal à une borne maximale.

Ce qui a été énoncé ci-dessus au sujet du point caractéristique de basse concentration peut s'appliquer au troisième aspect décrit ici.

Dans certains modes de réalisation, le procédé comprend également une étape de comparaison de la pureté mesurée et/ou du rendement mesuré avec une pureté cible. Si la pureté et/ou le rendement sont mesurés dans l'extrait et dans le raffinat, le procédé peut comprendre une étape de comparaison des deux puretés et/ou rendements mesurés avec une pureté et/ou un rendement cibles respectifs.

Dans certains modes de réalisation, le procédé selon l'invention comprend également une étape de modification du volume de mélange à séparer injecté par cycle en fonction de la différence entre la (ou les) pureté(s) mesurée(s) et la (ou les) pureté(s) cible(s) (et/ou de la différence entre le ou les rendements mesurés et le ou les rendements cibles).

Dans certains modes de réalisation, le procédé selon l'invention comprend une étape de modification du volume de phase mobile injecté par cycle en fonction de la différence entre la (ou les) pureté(s) mesurée(s) et la (ou les) pureté(s) cible(s) (et/ou de la différence entre le ou les rendements mesurés et le ou les rendements cibles).

Dans certains modes de réalisation, le volume de mélange injecté par cycle et le volume de phase mobile injecté par cycle sont modifiés conjointement en fonction de la différence entre la (ou les) pureté(s) mesurée(s) et la (ou les) pureté(s) cible(s) (et/ou de la différence entre le ou les rendements mesurés et le ou les rendements cibles).

Dans certains modes de réalisation, le procédé comprend une étape de définition de la position cible du ou des points caractéristiques en fonction de la différence entre la (ou les) pureté(s) mesurée(s) et la (ou les) pureté(s) cible(s) (et/ou de la différence entre le ou les rendements mesurés et le ou les rendements cibles). Il peut s'agir de la définition de la position cible du point caractéristique de haute concentration et/ou de la définition de la position cible du point caractéristique d'adsorption et/ou de celle du point caractéristique de désorption et/ou de celle du point caractéristique de basse concentration.

Ce qui a été énoncé ci-dessus à propos de la comparaison d'une pureté et/ou d'un rendement mesurés avec une pureté et/ou un rendement cibles, de la modification, en fonction de cette comparaison, du volume de mélange injecté et du volume de phase mobile et de la définition, en fonction de cette comparaison, de la position cible du point caractéristique peut s'appliquer au troisième aspect décrit ici.

Un autre objet de l'invention consiste en un programme d'ordinateur comprenant des instructions de code de programme pour l'exécution des étapes du procédé selon le troisième aspect décrit ci-dessus lorsque ledit programme est exécuté sur un ordinateur.

L'invention concerne aussi un support de stockage lisible par ordinateur sur lequel est enregistré un programme d'ordinateur tel que défini ci-dessus.

L'invention concerne aussi un système comprenant un processeur couplé à une mémoire sur laquelle est enregistré un programme d'ordinateur tel que défini ci-dessus. Ledit système peut également comprendre le système de séparation chromatographique tel que décrit ci-dessus ou être uniquement un système de commande, connecté au système de séparation et distinct de celui-ci.

EXEMPLES

Les exemples suivants (non selon l'invention) illustrent les premier et deuxième aspects décrits dans la présente divulgation sans les limiter.

Dans les exemples 1 à 5 qui suivent, un modèle de simulation chromatographique a été utilisé avec les paramètres suivants :

- espèces présentes dans le mélange à séparer : des polymères de glucose d'ordre supérieur ou égal à 2, le glucose et le fructose ;
- phase stationnaire : résine XA2004/30 Ca de Novasep ;
- phase mobile : eau ;
- température d'élution : entre 55°C et 65°C.

Des graphiques de concentration représentant un pulse de charge, une saturation à haute concentration et une saturation à basse concentration, dans une colonne de 2 mètres de long et de 8,5 cm de diamètre, à un débit de 20 mL/min, sont représentés respectivement en **figures 5.A, 5.B et 5.C.** Ces données permettent de reconstruire le modèle utilisé, à l'aide de tout logiciel de simulation chromatographique, en utilisant par exemple les méthodes décrites dans le manuel Preparative Chromatography of Fine Chemicals and Pharmaceutical Agents, Henner Schmidt-Traub, Wiley-VCH, ISBN-13 978-3-527-30643-5.

Le procédé appliqué dans les exemples 1, 2, 4 et 5 est un SSMB4 avec une hauteur totale de colonne de 8 mètres.

Le procédé appliqué dans l'exemple 3 est un SMB avec une hauteur totale de colonne de 8 mètres.

Dans les exemples 6 à 7 qui suivent, une séparation chromatographique réelle sur pilote a été réalisée, avec les paramètres suivants :

- espèces présentes dans le mélange à séparer : des polymères de glucose d'ordre supérieur ou égal à 2, le glucose et le fructose ;
- phase stationnaire : résine XA2004/30 Ca de Novasep ;
- phase mobile : eau ;
- température d'élution : entre 55°C et 65°C ;
- le pilote est composé de 4 colonnes de 2 mètres de long et de 8,5 cm de diamètre ;
- les débits des produits et éluant sont situés entre 20 et 30 mL/min ;
- le procédé appliqué est un SSMB avec une hauteur totale de colonne de 8 mètres.

Exemple 1

Une simulation de procédé chromatographique telle que décrite ci-dessus est réalisée.

Entre le cycle n°1 et le cycle n°10, le système est stabilisé, les volumes des différentes zones sont fixes et maintenus constants. Le volume de phase mobile injecté est de 0,18 BV (volume de lit).

A partir du cycle n°10, les zones sont régulées avec des positions cibles de points caractéristiques situées à + 0,17 pour la zone 4 (écart de la position cible du point caractéristique d'adsorption en volume rapporté au volume de cycle, par rapport à la position moyenne d'injection d'éluant) et -0,17 pour la zone 1 (écart de la position cible du point caractéristique de désorption en volume rapporté au volume de cycle, par rapport à la position moyenne d'injection d'éluant). Cela correspond à une position cible du point caractéristique de basse concentration située sur le point moyen d'injection d'éluant.

Une comparaison est alors réalisée entre un procédé régulé à l'aide des deux points caractéristiques d'adsorption et de désorption, sans limitation de volume de phase mobile (tel que décrit dans le document WO 2007/101944), et un procédé régulé à l'aide du point caractéristique de basse concentration dans lequel un seuil de volume maximal a été imposée.

Les résultats sont résumés dans les **figures 6, 7, 8 et 9**.

On constate que lorsque le procédé est régulé à l'aide des deux points caractéristiques d'adsorption et de désorption, les deux points caractéristiques atteignent chacun leur position cible. Il en est de même pour le point caractéristique de basse concentration. Afin d'atteindre ces objectifs de position de point caractéristique, le volume de phase mobile est augmenté à 0,27 BV.

Dans le second cas, le volume de phase mobile est limité à 0,22 BV et le procédé chromatographique est régulé selon l'invention à l'aide du point caractéristique de basse concentration. Le point caractéristique de basse concentration est inchangé. On constate que la position cible du point de basse concentration est atteinte, le point caractéristique atteint la position du point d'injection d'éluant. Cependant, les positions cibles des points caractéristiques d'adsorption et de désorption ne sont pas atteintes. Le volume de phase mobile nécessaire pour parvenir à ces positions cibles n'est pas atteint et a été limité à la valeur maximale prédéfinie. Les points caractéristiques d'adsorption et de désorption se situent à + 0,143 et - 0,143 par rapport à la position moyenne d'injection d'éluant (en volume rapporté au volume de cycle) respectivement. Les valeurs absolues des écarts entre chacun des points caractéristiques d'adsorption et de désorption et leur position cible sont identiques et la somme des écarts est nulle.

Ainsi, le procédé décrit dans la présente divulgation permet de ne pas dépasser une limite haute de volume de phase mobile utilisé, ce que ne permet pas un procédé régulé en tenant compte de deux points caractéristiques d'adsorption et de désorption.

Exemple 2

Une simulation de procédé chromatographique telle que décrite ci-dessus est réalisée.

Entre le cycle n°1 et le cycle n°10, le système est stabilisé, les volumes des différentes zones sont fixes et maintenus constants. Le volume de phase mobile est de 0,25 BV.

A partir du cycle n°10, les zones sont régulées avec des positions cibles de points caractéristiques situées à + 0,10 pour la zone 4 (position du point caractéristique d'adsorption en volume rapporté au volume de cycle, par rapport à la position moyenne d'injection d'éluant) et - 0,10 pour la zone 1 (position du point caractéristique de désorption en volume rapporté au volume de cycle, par rapport à la position moyenne d'injection d'éluant). Cela correspond à une position cible du point caractéristique de basse concentration située sur le point moyen d'injection d'éluant.

Une comparaison est alors réalisée entre un procédé régulé à l'aide des deux points caractéristiques d'adsorption et de désorption, sans limitation de volume de phase mobile (tel que décrit dans le document WO 2007/101944), et un procédé régulé à l'aide du point caractéristique de basse concentration dans lequel un seuil de volume minimal a été imposé.

Les résultats sont résumés dans les **figures 10, 11, 12 et 13**.

On constate que lorsque le procédé est régulé à l'aide des deux points caractéristiques d'adsorption et de désorption, les deux points caractéristiques atteignent chacun leur position cible (à + 0,10 et - 0,10). Il en est de même pour le point caractéristique de basse concentration. Afin d'atteindre ces objectifs de position de point caractéristique, le volume de phase mobile est réduit à 0,18 BV.

Dans le second cas, le volume de phase mobile est minimisé à 0,20 et le procédé chromatographique est régulé selon l'invention à l'aide du point caractéristique de basse concentration. Le point caractéristique de basse concentration est inchangé. On constate que la position cible du point de basse concentration est atteinte, sur le point d'injection d'éluant. Cependant, les positions cibles des points caractéristiques d'adsorption et de désorption ne sont pas atteintes. Le volume de phase mobile pour parvenir à ces positions cibles n'est pas atteint et a été limité à la valeur minimale prédéfinie. Les points caractéristiques d'adsorption et de désorption se situent à + 0,12 et - 0,12 par rapport à la position moyenne d'injection d'éluant (en volume rapporté au volume du cycle). Les écarts entre chacun des points caractéristiques d'adsorption et de désorption et leur position cible sont identiques.

Ainsi, le procédé décrit dans la présente divulgation permet de ne pas dépasser une limite basse de volume de phase mobile utilisé, ce que ne permet pas un procédé régulé en tenant compte de deux points caractéristiques d'adsorption et de désorption.

Exemple 3

Une simulation de procédé chromatographique telle que décrite ci-dessus est réalisée.

Des mesures de pureté et de rendement en fructose dans la fraction d'extrait et de raffinat sont effectuées alors que ces fractions sont collectées dans des bacs placés en sortie de chromatographie et avec un soutirage continu sur chacun d'entre eux de sorte que le volume moyen dans les bacs représente trois périodes

Entre le cycle n°1 et le cycle n°10, le système est stabilisé, les volumes des différentes zones sont fixes et maintenus constants. Le volume de mélange à séparer (charge) injecté est de 0,175 BV. Le rendement est de 90,3% et la pureté est de 84,9%. La position cible du point caractéristique de basse concentration est située sur le point moyen d'injection d'éluant.

A partir du cycle n°10, les zones ainsi que le volume de charge injecté sont régulées avec des objectifs de pureté de 90% et de rendement de 85% pour la fraction d'extrait. Le volume de phase mobile est maintenu constant à la valeur de + 0,2 BV en utilisant la régulation à l'aide du point caractéristique de basse concentration du procédé décrit dans la présente divulgation.

Les résultats sont résumés en **figure 14.**

Le point caractéristique de basse concentration est régulé sur la position moyenne d'injection de l'éluant. Le volume de la phase mobile est ainsi maintenu constant et contrôlé.

Les objectifs de rendement et de pureté sont atteints et le volume de charge injecté est augmenté à + 0,179 BV.

Exemple 4

Une simulation de procédé chromatographique telle que décrite ci-dessus est réalisée.

Des mesures de pureté et de rendement en fructose dans la fraction d'extrait sont effectuées.

Entre le cycle n°1 et le cycle n°10, le système est stabilisé, les volumes des différentes zones sont fixes et maintenus constants. Le volume de mélange à séparer (charge) injecté est de 0,175 BV. Le rendement est de 90,3% et la pureté est de 84,9%. Le volume de phase mobile est constant à la valeur de + 0,2 BV. La position cible du point caractéristique de basse concentration est située sur le point moyen d'injection d'éluant.

A partir du cycle n°10, le procédé est régulé à l'aide du point caractéristique de basse concentration selon le procédé décrit dans la présente divulgation, avec des objectifs de pureté et de rendement de 90% et 85% respectivement et un volume de charge injecté maintenu constant à la valeur de + 0,175 BV.

Les résultats sont résumés en **figure 15.**

Le point caractéristique de basse concentration est régulé à la position moyenne de l'injection de l'éluant. Le volume de la phase mobile est ainsi contrôlé.

Les objectifs de rendement et de pureté sont atteints et le volume de phase mobile est réduit à + 0,194 BV.

Exemple 5

Une simulation de procédé chromatographique telle que décrite ci-dessus est réalisée.

Des mesures de pureté et de rendement en fructose dans la fraction d'extrait sont effectuées.

La position cible du point caractéristique de basse concentration est optimisée en fonction de la pureté et du rendement souhaités.

Dans un premier essai, la position cible du point caractéristique de basse concentration est fixée à - 0,1 BV (vers l'extrait) par rapport à la position moyenne d'injection de l'éluant et la régulation décrite dans l'exemple 4 est appliquée.

Les résultats sont résumés en **figure 16.** On obtient un volume de phase mobile de + 0,198 BV.

Dans un second essai, la position cible du point caractéristique de basse concentration est fixée à + 0,1 BV (vers le raffinat) par rapport à la position moyenne d'injection de l'éluant et la régulation décrite dans l'exemple 4 est appliquée.

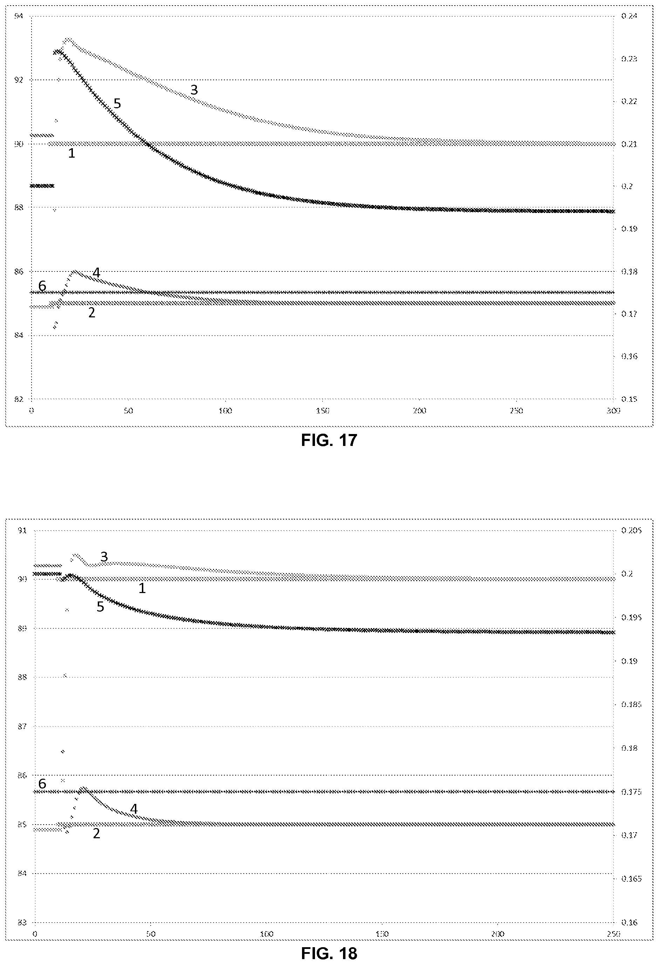

Les résultats sont résumés en **figure 17.** On obtient un volume de phase mobile de + 0,194 BV.

Il est ainsi possible de positionner le point caractéristique de basse concentration pour obtenir le minimum de volume de phase mobile. Avec un point caractéristique positionné à + 0,04 BV vers le raffinat par rapport à la position moyenne d'injection de l'éluant, on obtient le volume de phase mobile minimal de cette séparation (à une valeur de + 0,193 BV) avec un volume de charge injecté fixé à + 0,175 BV. Les résultats sont résumés en **figure 18.**

Exemple 6

Un test expérimental chromatographique tel que décrit ci-dessus est réalisé.

Un procédé chromatographique est mis en oeuvre pour traiter un mélange à séparer contenant du glucose, du fructose et une faible quantité de polymère de glucose (avec un degré de polymérisation de 2 (DP2), de 3 (DP3) et au-dessus).

Une calibration d'un densimètre et un polarimètre est effectuée pour les deux espèces à séparer (glucose et fructose), en fonction de la température et en fonction de la concentration de l'espèce. Les résultats de la calibration du polarimètre sont résumés en **figure 19 et 20.**

Deux historiques sont ensuite mesurés à l'aide du densimètre et du polarimètre préalablement calibrés positionnés en ligne.

Les **figures 1 et 2** illustrent l'exemple car à partir de ces historiques, sur un cycle, une intégration du signal de chaque détecteur est réalisée sur la portion de l'historique correspondant à une collecte de fraction, pour chaque fraction (l'extrait et le raffinat), afin de déterminer une densité « moyenne » et une polarité « moyenne » pour chaque fraction collectée.

Le glucose et le mélange de polymères de glucose sont dextrogyres, c'est-à-dire que l'angle de rotation induit par le glucose et les polymères de glucose mesuré par un polarimètre est positif. Le fructose est lévogyre, c'est-à-dire que l'angle de rotation induit par le fructose mesuré par un polarimètre est négatif.

L'angle de rotation mesuré par un polarimètre lors d'une mesure sur un mélange est la somme des angles de rotations induits par les différentes espèces contenues dans le mélange de façon unitaire.

Ainsi, on peut établir l'équation suivante :

$$\alpha = \alpha(T)^{Glucose}.C^{Glucose} + \alpha(T)^{Fructose}.C^{Fructose},$$

dans laquelle :

- $\alpha$ est l'angle du mélange glucose/fructose mesuré par le polarimètre,
- $\alpha(T)$ est l'angle de rotation de l'espèce à la température appliquée à la mesure, obtenu lors de la calibration du polarimètre, et
- $C$ est la concentration de l'espèce.

La mesure de la densité d'un mélange de glucose et fructose par un densimètre en fonction des concentrations de chaque sucre répond à l'équation suivante :

$$Densité = \beta(T).(C^{Glucose} + C^{Fructose}) + Densité_{Eluant}(T),$$

dans laquelle :

- $Densité$ est la densité mesurée par le densimètre,
- $Densité_{Eluant}(T)$ est la densité de l'éluant à la température de la mesure,
- $\beta(T)$ est le facteur de masse volumique du glucose et du fructose à la température appliquée à la mesure, ce facteur étant identique pour le glucose et le fructose purs à une température donnée, et
- $C$ est la concentration de l'espèce.

Ces deux équations permettent, à partir de la densité et de l'angle de rotation moyens caractérisant chaque fraction de calculer par la méthode du pivot de Gauss la concentration du glucose et du fructose dans le mélange. La pureté de chaque fraction en glucose et en fructose peut être ensuite calculée à partir de ces concentrations.

Cette méthode permet de mesurer les concentrations de glucose et de fructose d'une fraction collectée de manière relativement précise. Les puretés de l'extrait et du raffinat peuvent également être corrigés à la marge d'un terme correctif dépendant de la répartition d'autres impuretés minoritaires telles que des polymères de glucose entre ces deux fractions collectées.

Exemple 7

Un test expérimental chromatographique tel que décrit ci-dessus est réalisé.

Des mesures de pureté et de rendement en fructose dans la fraction d'extrait sont effectuées.

Entre le cycle n°1 et le cycle n°20, le système est stabilisé et régulé. Le volume de mélange à séparer (charge) injecté est de 0,15 BV. Le rendement est de 90% et la pureté est de 90%. La position cible du point caractéristique de basse concentration est située sur le point moyen d'injection d'éluant.

A partir du cycle n°20, les zones ainsi que le volume de charge injecté sont régulées avec des objectifs de pureté de 86% et de rendement de 92%. Le volume de phase mobile est maintenu constant à la valeur de + 0,18 BV en utilisant la régulation à l'aide du point caractéristique de basse concentration du procédé décrit dans la présente divulgation. A partir du cycle n°60, des oscillations sur la concentration de la charge injectée ont été effectuées et le procédé de contrôle a maintenu les performances du système.

Les résultats sont résumés en **figure 21**.

Le point caractéristique de basse concentration est régulé sur la position moyenne d'injection de l'éluant. Le volume de la phase mobile est ainsi maintenu constant et contrôlé.

Les objectifs de rendement et de pureté sont atteints et le volume de charge injecté est augmenté à + 0,16 BV.

**Revendications**

**1.** Procédé de séparation d'un mélange dans une installation comprenant :

- un premier système comprenant une pluralité de colonnes de chromatographie, une ligne de sortie pour la collecte d'un raffinat et une ligne de sortie pour la collecte d'un extrait ;
- au moins un second système placé en aval du premier système ; et
- au moins une cuve alimentée par une desdites lignes de sortie du premier système, et alimentant le second système avec un flux continu ;

le procédé comprenant successivement, de manière cyclique, dans une partie donnée du premier système :

- une étape de collecte d'un raffinat, une étape d'injection du mélange à séparer, une étape de collecte d'un extrait et une étape d'injection de phase mobile ;

le procédé comprenant par ailleurs la mesure de la pureté et/ou du rendement d'au moins une fraction collectée choisie parmi l'extrait et le raffinat, ladite mesure de pureté et/ou de rendement comprenant les étapes suivantes:

- la détermination de la concentration d'au moins deux espèces du mélange à séparer dans la fraction collectée dans la cuve ;
- la détermination de la pureté et/ou du rendement en au moins une espèce de la fraction collectée dans la cuve à partir des concentrations des au moins deux espèces du mélange à séparer déterminées dans la fraction collectée dans la cuve.

**2.** Procédé selon la revendication 1, dans lequel la détermination de la concentration d'au moins deux espèces du mélange à séparer dans la fraction collectée dans la cuve est effectuée au moyen d'au moins un détecteur.

**3.** Procédé selon la revendication 2, dans lequel l'au moins un détecteur est choisi parmi les spectromètres proche infrarouge, les spectromètres infrarouge, les spectromètres infrarouge à transformée de Fourier et les spectromètres Raman ; ou parmi les systèmes de chromatographie analytique, tels que la chromatographie en phase liquide à haute performance, la chromatographie en phase liquide à haute pression, la chromatographie en phase liquide à ultra haute pression, la chromatographie en phase gazeuse.

**4.** Procédé selon l'une des revendications 1 à 3, dans lequel le second système est une unité de chromatographie, une unité de transformation enzymatique, une unité de transformation chimique, une unité de distillation, une unité de concentration membranaire, ou une unité d'évaporation, de préférence une unité d'évaporation.

**5.** Procédé selon l'une des revendications 1 à 4, dans lequel la cuve contient un volume de fraction égal au volume de la fraction collectée sur une durée d'une à cinq périodes, de préférence sur trois périodes du procédé.

**6.** Procédé selon l'une des revendications 1 à 5, dans lequel la cuve a un volume inférieur au volume de la fraction collectée sur un cycle.

**7.** Procédé selon l'une des revendications 1 à 6, dans lequel les au moins deux espèces du mélange à séparer sont des monosaccharides, de préférence le glucose et le fructose, et dans lequel l'extrait et le raffinat sont enrichis en des monosaccharides différents.

**8.** Procédé selon l'une des revendications 1 à 7, dans lequel l'injection du mélange à séparer est continue ou quasi-continue, ledit procédé étant de préférence un procédé à lit mobile simulé.

**9.** Procédé selon l'une des revendications 1 à 7, dans lequel l'injection du mélange à séparer est discontinue, ledit procédé étant de préférence un procédé à lit mobile simulé séquentiel.

10. Procédé selon l'une des revendications 1 à 9, dans lequel le premier système comprend des zones 1, 2, 3 et 4, la zone 1 étant située entre une ligne d'injection de phase mobile et une ligne de collecte de l'extrait, la zone 2 étant située entre ladite ligne de collecte de l'extrait et une ligne d'injection du mélange à séparer, la zone 3 étant située entre ladite ligne d'injection du mélange à séparer et une ligne de collecte du raffinat, et la zone 4 étant située entre ladite ligne de collecte du raffinat et ladite ligne d'injection de phase mobile ;
le procédé comprenant en outre :

- la détermination, en un noeud du système, de l'historique d'une variable représentative de la concentration d'une ou plusieurs espèces contenues dans le mélange à séparer ;
- la détection sur l'historique d'un point caractéristique situé entre le début d'une étape de collecte du raffinat et la fin de l'étape suivante de collecte de l'extrait ;
- la comparaison de la position dudit point caractéristique par rapport à une position cible ;
- l'ajustement du volume porteur de la zone 2 et/ou du volume porteur de la zone 3 modifiant la position dudit point caractéristique pour la rapprocher de sa position cible.

11. Procédé selon l'une des revendications 1 à 10, dans lequel le premier système comprend des zones 1, 2, 3 et 4, la zone 1 étant située entre une ligne d'injection de phase mobile et une ligne de collecte de l'extrait, la zone 2 étant située entre ladite ligne de collecte de l'extrait et une ligne d'injection du mélange à séparer, la zone 3 étant située entre ladite ligne d'injection du mélange à séparer et une ligne de collecte du raffinat, et la zone 4 étant située entre ladite ligne de collecte du raffinat et ladite ligne d'injection de phase mobile ;
le procédé comprenant en outre :

- la détection sur l'historique d'un premier point caractéristique entre le début de l'étape de collecte d'extrait et la fin de l'étape suivante d'injection de phase mobile ;
- la détection sur l'historique d'un deuxième point caractéristique entre le début de l'étape d'injection de phase mobile et la fin de l'étape suivante de collecte de raffinat ;
- la comparaison de la position de chacun des points caractéristiques à une position cible respective ;
- l'ajustement du volume porteur de la zone 1 et du volume porteur de la zone 4, modifiant respectivement la position du premier point caractéristique et du deuxième point caractéristique, pour les rapprocher de leurs positions cibles respectives.

12. Procédé selon l'une des revendications 1 à 11, dans lequel le premier système comprend des zones 1, 2, 3 et 4, la zone 1 étant située entre une ligne d'injection de phase mobile et une ligne de collecte de l'extrait, la zone 2 étant située entre ladite ligne de collecte de l'extrait et une ligne d'injection du mélange à séparer, la zone 3 étant située entre ladite ligne d'injection du mélange à séparer et une ligne de collecte du raffinat, et la zone 4 étant située entre ladite ligne de collecte du raffinat et ladite ligne d'injection de phase mobile ;
le procédé comprenant en outre :

- la détermination, en un noeud du système, de l'historique d'une variable représentative de la concentration d'une ou plusieurs espèces contenues dans le mélange à séparer ;
- la détection sur ledit historique d'un point caractéristique entre le début d'une étape de collecte de l'extrait et la fin de l'étape suivante de collecte du raffinat ;
- la comparaison de la position dudit point caractéristique par rapport à une position cible ;
- l'ajustement du volume porteur de la zone 1 et/ou du volume porteur de la zone 4, modifiant la position dudit point caractéristique pour rapprocher la position dudit point caractéristique de sa position cible ;
- le volume de la phase mobile injecté par cycle étant de préférence maintenu supérieur ou égal à une borne minimale et/ou inférieur ou égal à une borne maximale.

13. Procédé selon l'une des revendications 1 à 12, comprenant en outre une étape de comparaison de la pureté et/ou du rendement mesuré avec une pureté et/ou un rendement cible.

14. Procédé selon la revendication 13, comprenant en outre :

- une étape de modification du volume de mélange à séparer injecté par cycle en fonction de la différence entre la pureté et/ou le rendement mesuré et la pureté et/ou le rendement cible ; et/ou
- une étape de modification du volume de phase mobile injecté par cycle en fonction de la différence entre la pureté et/ou le rendement mesuré et la pureté et/ou le rendement cible ; et/ou
- une étape de définition de la ou des positions cibles en fonction de la différence entre la pureté et/ou le rendement mesuré et la pureté cible.

**Patentansprüche**

1. Verfahren zum Trennen eines Gemischs in einer Anlage, umfassend:

   - ein erstes System, umfassend eine Vielzahl von Chromatographiesäulen, eine Ausgangsleitung zum Auffangen eines Raffinats und eine Ausgangsleitung zum Auffangen eines Extrakts;
   - mindestens ein zweites System, das stromabwärts von dem ersten System platziert ist; und
   - mindestens einen Behälter, der von einer der genannten Ausgangsleitungen des ersten Systems versorgt wird und das zweite System mit einem kontinuierlichen Strom versorgt;

   das Verfahren umfassend nacheinander, zyklisch, in einem gegebenen Teil des Systems:

   - einen Schritt eines Auffangens eines Raffinats, einen Schritt eines Einspritzens des zu trennenden Gemischs, einen Schritt eines Auffangens eines Extrakts und einen Schritt eines Einspritzens der mobilen Phase;

   das Verfahren ferner umfassend das Messen der Reinheit und/oder des Ertrags mindestens einer aufgefangenen Fraktion, die ausgewählt ist aus dem Extrakt und dem Raffinat, das Messen der Reinheit und/oder des Ertrag umfassend die folgenden Schritte:

   - Bestimmen der Konzentration von mindestens zwei Spezies des zu trennenden Gemischs in der aufgefangenen Fraktion in dem Behälter;
   - Bestimmen der Reinheit und/oder des Ertrags an mindestens einer Spezies der in dem Behälter aufgefangenen Fraktion anhand der Konzentrationen der mindestens zwei Spezies des zu trennenden Gemischs, die in der Fraktion bestimmt werden, die in dem Behälter aufgefangen wird.

2. Verfahren nach Anspruch 1, wobei das Bestimmen der Konzentration von mindestens zwei Spezies des zu trennenden Gemischs in der in dem Behälter aufgefangenen Fraktion mittels mindestens eines Detektors durchgeführt wird.

3. Verfahren nach Anspruch 2, wobei der mindestens eine Detektor ausgewählt ist aus Nahinfrarot-Spektrometern, Infrarot-Spektrometern, Fourier-Transformation-Infrarot-Spektrometern und Raman-Spektrometern; oder aus analytischen Chromatographiesystemen, wie beispielsweise Hochleistungs-Flüssigkeitschromatographie, Hochdruck-Flüssigkeitschromatographie, Ultrahochdruck-Flüssigkeitschromatographie und Gaschromatographie.

4. Verfahren nach einem der Ansprüche 1 bis 3, wobei das zweite System eine Chromatographieeinheit, eine enzymatische Umwandlungseinheit, eine chemische Umwandlungseinheit, eine Destillationseinheit, eine Membrankonzentrationsanlage oder eine Verdampfungseinheit, vorzugsweise eine Verdampfungseinheit, ist.

5. Verfahren nach einem der Ansprüche 1 bis 4, wobei der Behälter ein Fraktionsvolumen enthält, das gleich wie das Volumen der Fraktion ist, die über eine Dauer von einer bis fünf Perioden, vorzugsweise über drei Perioden des Verfahrens, aufgefangen wird.

6. Verfahren nach einem der Ansprüche 1 bis 5, wobei der Behälter ein Volumen aufweist, das kleiner ist als das Volumen der Fraktion, die über einen Zyklus aufgefangen wird.

7. Verfahren nach einem der Ansprüche 1 bis 6, wobei die mindestens zwei Spezies des zu trennenden Gemischs Monosaccharide sind, vorzugsweise Glucose und Fructose, und wobei der Extrakt und das Raffinat mit unterschiedlichen Monosacchariden angereichert sind.

8. Verfahren nach einem der Ansprüche 1 bis 7, wobei das Einspritzen des zu trennenden Gemisches kontinuierlich oder quasi-kontinuierlich erfolgt, wobei das Verfahren vorzugsweise ein simuliertes Wanderbettverfahren ist.

9. Verfahren nach einem der Ansprüche 1 bis 7, wobei das Einspritzen des zu trennenden Gemisches diskontinuierlich erfolgt, wobei das Verfahren vorzugsweise ein sequentielles simuliertes Wanderbettverfahren ist.

10. Verfahren nach einem der Ansprüche 1 bis 9, wobei das erste System Zonen 1, 2, 3 und 4 umfasst, wobei sich die Zone 1 zwischen einer Einspritzleitung für mobile Phase und einer Auffangleitung des Extrakts befindet, sich die Zone 2 zwischen der genannten Auffangleitung für den Extrakt und einer Einspritzleitung des zu trennenden Gemischs befindet, sich die Zone 3 zwischen der Einspritzleitung des zu trennenden Gemischs und einer Auffangleitung für das Raffinat befindet und sich die Zone 4 zwischen der Auffangleitung des Raffinats und der Einspritzleitung der mobilen Phase befindet;
das Verfahren ferner umfassend:

- Bestimmen, an einem Knoten des Systems, des Verlaufs einer Variablen, die repräsentativ für die Konzentration einer oder mehrerer Spezies ist, die in dem zu trennenden Gemisch enthalten sind;
- Erfassen eines charakteristischen Punkts auf dem Verlauf, der sich zwischen dem Beginn eines Auffangschritts des Raffinats und dem Ende des nächsten Auffangschritts des Extrakts befindet;
- Vergleichen der Position des charakteristischen Punkts mit einer Sollposition;
- Anpassen des Trägervolumens der Zone 2 und/oder des Trägervolumens der Zone 3 zum Ändern der Position des charakteristischen Punkts, um ihn an seine Sollposition anzunähern.

11. Verfahren nach einem der Ansprüche 1 bis 10, wobei das erste System Zonen 1, 2, 3 und 4 umfasst, wobei sich die Zone 1 zwischen einer Einspritzleitung für mobile Phase und einer Auffangleitung des Extrakts befindet, sich die Zone 2 zwischen der genannten Auffangleitung für den Extrakt und einer Einspritzleitung des zu trennenden Gemischs befindet, sich die Zone 3 zwischen der Einspritzleitung des zu trennenden Gemischs und einer Auffangleitung für das Raffinat befindet und sich die Zone 4 zwischen der Auffangleitung des Raffinats und der Einspritzleitung der mobilen Phase befindet;
das Verfahren ferner umfassend:

- Erfassen eines ersten charakteristischen Punkts zwischen dem Beginn des Auffangschritts des Extrakts und dem Ende des folgenden Einspritzschritts der mobilen Phase auf dem Verlauf;
- Erfassen auf dem Verlauf eines zweiten charakteristischen Punkts zwischen dem Beginn des Einspritzschritts der mobilen Phase und dem Ende des folgenden Auffangschritts des Raffinats;
- Vergleichen der Position von jedem der charakteristischen Punkte mit einer jeweiligen Sollposition;
- Anpassen des Trägervolumens von Zone 1 und des Trägervolumens von Zone 4, wobei die Position des ersten charakteristischen Punkts bzw. des zweiten charakteristischen Punkts geändert wird, um sie an ihre jeweiligen Sollpositionen anzunähern.

12. Verfahren nach einem der Ansprüche 1 bis 11, wobei das erste System Zonen 1, 2, 3 und 4 umfasst, wobei sich die Zone 1 zwischen einer Einspritzleitung für mobile Phase und einer Auffangleitung des Extrakts befindet, sich die Zone 2 zwischen der genannten Auffangleitung für den Extrakt und einer Einspritzleitung des zu trennenden Gemischs befindet, sich die Zone 3 zwischen der Einspritzleitung des zu trennenden Gemischs und einer Auffangleitung für das Raffinat befindet und sich die Zone 4 zwischen der Auffangleitung des Raffinats und der Einspritzleitung der mobilen Phase befindet;
das Verfahren ferner umfassend:

- Bestimmen, an einem Knoten des Systems, des Verlaufs einer Variablen, die repräsentativ für die Konzentration einer oder mehrerer Spezies ist, die in dem zu trennenden Gemisch enthalten sind;
- Erfassen eines charakteristischen Punkts zwischen dem Beginn eines Auffangschritts des Extrakts und dem Ende des folgenden Auffangschritts des Raffinats auf dem Verlauf;
- Vergleichen der Position des charakteristischen Punkts mit einer Sollposition;
- Anpassen des Trägervolumens der Zone 1 und/oder des Trägervolumens der Zone 4 zum Ändern der Position des charakteristischen Punkts, um die Position des charakteristischen Punkts an seine Sollposition anzunähern;
- wobei das pro Zyklus eingespritzte Volumen der mobilen Phase vorzugsweise größer als oder gleich wie ein Minimalgrenzwert und/oder kleiner als oder gleich wie ein Maximalgrenzwert gehalten wird.

13. Verfahren nach einem der Ansprüche 1 bis 12, ferner umfassend einen Vergleichsschritt der/des gemessenen Reinheit und/oder Ertrags mit einer Sollreinheit und/oder einem Sollertrag.

14. Verfahren nach Anspruch 13, ferner umfassend:

- einen Schritt eines Änderns des pro Zyklus eingespritzten Volumens des zu trennenden Gemischs abhängig von der Differenz zwischen der gemessenen Reinheit und/oder Ertrag und der angestrebten Reinheit und/oder Ertrag; und/oder

- einen Schritt eines Änderns des Volumens der pro Zyklus injizierten mobilen Phase abhängig von der Differenz zwischen der gemessenen Reinheit und/oder Ertrag und der angestrebten Reinheit und/oder Ertrag; und/oder

- einen Schritt eines Definierens der Sollposition(en) basierend auf der Differenz zwischen der gemessenen Reinheit und/oder Ertrag und der Sollreinheit.

## Claims

1. A method of separating a mixture in an installation comprising:

   - a first system comprising a plurality of chromatography columns, an outlet line for collecting a raffinate and an outlet line for collecting an extract;
   - at least one second system placed downstream of a first system; and
   - at least one tank fed by one of said outlet lines of the first system and feeding the second system with a continuous stream;

   the method successively comprising, in a cyclic manner, in a given part of the first system:

   - a step of collecting a raffinate, a step of injecting the mixture to be separated, a step of collecting an extract, and a step of injecting a mobile phase;

   wherein the method further comprises the measurement of the purity and/or of the yield of at least one collected fraction chosen from the extract and the raffinate, said measurement of the purity and/or of the yield comprising the following steps:

   - the determination of the concentration of at least two species of the mixture to be separated in the fraction collected in the tank;
   - the determination of the purity and/or of the yield of at least one species of the fraction collected in the tank based on the concentrations of the at least two species of the mixture to be separated as determined in the fraction collected in the tank.

2. The method according to claim 1, wherein the determination of the concentration of at least two species of the mixture to be separated in the fraction collected in the tank is performed using at least one detector.

3. The method according to claim 2, wherein the at least one detector is chosen from near infrared spectrometers, infrared spectrometers, infrared Fourier transform spectrometers and Raman spectrometers; or from analytical chromatography systems, such as High Performance Liquid Chromatography, High Pressure Liquid Chromatography, Ultra High Pressure Liquid Chromatography, Gas Chromatography.

4. The method according to any one of claims 1 to 3, wherein the second system is a chromatography unit, an enzymatic transformation unit, a chemical transformation unit, a distillation unit, a membrane concentration unit, or an evaporation unit, preferably an evaporation unit.

5. The method according to any one of claims 1 to 4, wherein the tank contains a fraction volume equal to the volume of the fraction collected over a period of one to five periods, preferably over three periods of the method.

6. The method according to any one of claims 1 to 5, wherein the tank has a volume less than the volume of the fraction collected over a cycle.

7. The method according to any one of claims 1 to 6, wherein the at least two species of the mixture to be separated are monosaccharides, preferably glucose and fructose, and wherein the extract and the raffinate are enriched with different monosaccharides.

8. The method according to any one of claims 1 to 7, wherein the injection of the mixture to be separated is continuous or quasi-continuous, said method being preferably a simulated moving bed process.

9. The method according to any one of claims 1 to 7, wherein the injection of the mixture to be separated is discontinuous, said method being preferably a sequential simulated moving bed process.

10. The method according to any one of claims 1 to 9, wherein the first system comprises areas 1, 2, 3 and 4, wherein the area 1 is located between a line for injecting the mobile phase and a line for collecting the extract, the area 2 is located between said line for collecting the extract and a line for injecting the mixture to be separated, the area 3 is located between said line for injecting the mixture to be separated and a line for collecting the raffinate, and the area 4 is located between said line for collecting the raffinate and said line for injecting the mobile phase; the method further comprising:

- the determination, in a node of the system, of the history of a variable that is representative of the concentration of one or more species contained in the mixture to be separated;
- the detection on the history of a characteristic point located between the start of a step of collecting the raffinate and the end of the following step of collecting the extract;
- the comparison of the position of said characteristic point against a target position;
- the adjustment of the carrying volume of the area 2 and/or of the carrying volume of the area 3, modifying the position of said characteristic point to bring it closer to its target position.

11. The method according to any one of claims 1 to 10, wherein the first system comprises areas 1, 2, 3 and 4, wherein the area 1 is located between a line for injecting the mobile phase and a line for collecting the extract, the area 2 is located between said line for collecting the extract and a line for injecting the mixture to be separated, the area 3 is located between said line for injecting the mixture to be separated and a line for collecting the raffinate, and the area 4 is located between said line for collecting the raffinate and said line for injecting the mobile phase; the method further comprising:

- the detection on the history of a first characteristic point between the start of the step of collecting the extract and the end of the following step of injecting the mobile phase;
- the detection on the history of a second characteristic point between the start of the step of injecting the mobile phase and the end of the following step of collecting the raffinate;
- the comparison of the position of each of the characteristic points against a respective target position;
- the adjustment of the carrying volume of the area 1 and of the carrying volume of the area 4, modifying respectively the position of the first characteristic point and of the second characteristic point to bring them closer to their respective target positions.

12. The method according to any one of claims 1 to 11, wherein the first system comprises areas 1, 2, 3 and 4, wherein the area 1 is located between a line for injecting the mobile phase and a line for collecting the extract, the area 2 is located between said line for collecting the extract and a line for injecting the mixture to be separated, the area 3 is located between said line for injecting the mixture to be separated and a line for collecting the raffinate, and the area 4 is located between said line for collecting the raffinate and said line for injecting the mobile phase; the method further comprising:

- the determination, in a node of the system, of the history of a variable that is representative of the concentration of one or more species contained in the mixture to be separated;
- the detection on said history of a characteristic point between the start of a step of collecting the extract and the end of the following step of collecting the raffinate;
- the comparison of the position of said characteristic point against a target position;
- the adjustment of the carrying volume of the area 1 and/or of the carrying volume of the area 4, modifying the position of said characteristic point to bring the position of said characteristic point closer to its target position.
- the volume of mobile phase injected per cycle being preferably maintained greater than or equal to a minimum limit and/or less than or equal to a maximum limit.

13. The method according to any one of claims 1 to 12, further comprising a step of comparing the measured purity and/or yield with a target purity and/or yield.

14. The method according to claim 13, further comprising:

- a step of modifying the volume of mixture to be separated injected per cycle according to the difference between the measured purity and/or yield and the target purity and/or yield; and/or

- a step of modifying the volume of mobile phase injected per cycle according to the difference between the measured purity and/or yield and the target purity and/or yield; and/or
- a step of defining the target position(s) according to the difference between the measured purity and/or yield and the target purity.

**FIG. 1**

**FIG. 2**

FIG. 3

FIG. 4

FIG. 5.A

FIG. 5.B

FIG. 5.C

FIG. 6

FIG. 7

FIG. 8

FIG. 9

FIG. 10

**FIG. 11**

**FIG. 12**

**FIG. 13**

**FIG. 14**

**FIG. 15**

**FIG. 16**

**FIG. 17**

**FIG. 18**

FIG. 19

FIG. 20

**FIG. 21**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699917
- US 5457260 A
- FR 2762793
- DE 19842550
- US 20050107895 A
- FR 2808270
- EP 0878222 A
- WO 2007101944 A
- EP 0342629 A
- US 5064539 A
- WO 2015104464 A

**Littérature non-brevet citée dans la description**

- **P.C. WANKAT.** Large Scale Adsorption and Chromatography. CRC press, 1986
- Adsorption and Ion Exchange. **M.D. LE VAN et al.** Perry's Chemical Engineers' Handbook. Mac-Graw-Hill, 1997
- **R. M. NICOUD et al.** Choice and optimization of operating mode in industrial chromatography. *Proceeding of the 9th International Symposium on preparative and industrial chromatography, PREP 92,* Avril 1992, 205-220
- **H. SCHRAMM et al.** Optimal operation of simulated moving bed chromatographie processes by means of simple feedback control. *Journal of Chromatography A,* 2003, vol. 1006, 3-13
- **HENNER SCHMIDT-TRAUB.** Preparative Chromatography of Fine Chemicals and Pharmaceutical Agents. Wiley-VCH